# EUROPÄISCHE PATENTSCHRIFT

(11) **EP 4 097 838 B1**
(45) Veröffentlichungstag und Bekanntmachung des Hinweises auf die Patenterteilung: **27.12.2023**
(21) Anmeldenummer: 21700556.0
(22) Anmeldetag: 13.01.2021
(51) Int. Cl.: H02P 3/22, H02H 7/00

(54) **VERFAHREN ZUM STEUERN WENIGSTENS EINES SERVOMOTORS, ZUGEHÖRIGE STEUERVORRICHTUNG UND COMPUTERPROGRAMMPRODUKT**
METHOD FOR CONTROLLING AT LEAST ONE SERVOMOTOR, ASSOCIATED CONTROL DEVICE AND COMPUTER PROGRAM PRODUCT
PROCÉDÉ DE COMMANDE D'AU MOINS UN SERVOMOTEUR, DISPOSITIF DE COMMANDE ASSOCIÉ ET PRODUIT DE PROGRAMME INFORMATIQUE

(30) Priorität: 27.01.2020 DE 102020200925
(43) Veröffentlichungstag der Anmeldung: 07.12.2022
(73) Patentinhaber: KUKA Deutschland GmbH, 86165 Augsburg (DE)
(72) Erfinder: PFISTER, Thomas, 86863 Untermeitingen (DE); LANGHANS, Michael, 86676 Ehekirchen (DE); FISCHER, Andreas, 86199 Augsburg (DE)
(74) Vertreter: Oelke, Jochen
(86) Internationale Anmeldenummer: PCT/EP2021/050549
(87) Internationale Veröffentlichungsnummer: WO 2021/151667

(56) Entgegenhaltungen:
- EP-A2- 1 818 207
- JP-A- 2014 065 086
- US-A1- 2009 224 706

## Beschreibung

Die Erfindung betrifft ein Verfahren zum Steuern wenigstens eines Servomotors mittels eines Umrichters. Die Erfindung betrifft außerdem eine zugehörige Steuervorrichtung und ein Computerprogrammprodukt.

Die EP 2 224 586 A1 offenbart ein Verfahren zur Steuerung eines motorbetriebenen Industrieroboters, welcher zumindest einen Antriebsmotor umfasst, der von einer an Netzspannung anschließbaren Versorgungsschaltung gespeist wird, welche zumindest eine mit der Netzspannung verbindbare Gleichrichterschaltung, eine Zwischenkreisschaltung mit zumindest einem Zwischenkreiskondensator, sowie eine ausgangsseitig an den Antriebsmotor angeschlossene Brückenschaltereinrichtung umfasst, die eine Wechsel- oder Gleichstromversorgung für den Antriebsmotor bereitstellt, wobei die Versorgungsschaltung des Antriebsmotors durch eine Steuereinrichtung zum Beschleunigen und Abbremsen des Antriebsmotors gesteuert wird. Das dortige Verfahren zum elektrischen Abbremsen des Antriebsmotors umfasst die Schritte des Trennens der Zwischenkreisschaltung vom Netz und des Regelns der Zwischenkreisspannung auf einen vorgegebenen Wert größer Null, wobei der Zwischenkreiskondensator in einem generatorischen Betrieb des Antriebsmotors gespeist wird.

Die DE 10 2007 059 492 B4 offenbart einen Industrieroboter, aufweisend einen Roboterarm, der mehrere Achsen und wenigstens einen elektrischen Antrieb mit einem Drehstrommotor und mit einer den Drehstrommotor ansteuernden Leistungselektronik aufweist, wobei die Leistungselektronik einen den Drehstrommotor antreibenden Dreiphasen-Wechselrichter und einen, einen Zwischenkreis-Kondensator aufweisenden und dem Dreiphasen-Wechselrichter vorgeschalteten Zwischenkreis mit einem ersten Bremswiderstand und mit einem ersten Schalter aufweist, wobei der elektrische Antrieb eingerichtet ist, die relevante Achse zu bewegen, wobei der Industrieroboter eingerichtet ist, den Drehstrommotor im Rahmen einer Notbremsung gleichzeitig mittels zweier voneinander unabhängiger elektrischer Strompfade kurz zu schließen und während einer Notbremsung den ersten Schalter zu schließen, um den Bremswiderstand parallel zum Zwischenkreiskondensator zu schalten, so dass einer der beiden elektrischen Strompfade für die Notbremsung durch den ersten Bremswiderstand verläuft.

Die JP 2014 065086 A offenbart ebenfalls ein Robotersystem mit einer Schutzeinrichtung für einen Wechselrichter vor Überlast, sofern die Bewegung eines Roboterelement andauert.

Aufgabe der Erfindung ist es, ein Verfahren zum Steuern wenigstens eines Servomotors mittels eines Umrichters zu schaffen, das besonders effektiv und sicher arbeitet.

Die Aufgabe wird gelöst durch ein Verfahren zum Steuern wenigstens eines Servomotors mittels eines Umrichters, der umfasst:
- eine an ein elektrisches Netz angeschlossene Eingangsschaltung,
- einen aus der Eingangsschaltung speisbaren Gleichspannungszwischenkreis,
- eine erste Schaltvorrichtung, die ausgebildet ist, in ihrem eingeschalteten Zustand den Gleichspannungszwischenkreis mit elektrischer Energie aus der Eingangsschaltung zu speisen und in ihrem ausgeschalteten Zustand eine Versorgung des Gleichspannungszwischenkreises aus dem elektrischen Netz zu unterbinden, so dass keine elektrische Energie aus dem elektrischen Netz in den Gleichspannungszwischenkreis gelangt,
- wenigstens eine aus dem Gleichspannungszwischenkreis speisbare Wechselrichterschaltung mit ansteuerbaren Leistungshalbleiterschaltern zum elektrischen Ansteuern des Servomotors, sowie
- eine zweite Schaltvorrichtung, die ausgebildet ist, in ihrem eingeschalteten Zustand den Servomotor mit elektrischer Energie aus der Wechselrichterschaltung zu speisen, um den Servomotor anzutreiben und in ihrem ausgeschalteten Zustand ein Antreiben des Servomotors zu unterbinden, so dass keine den Servomotor antreibende elektrische Energie aus der Wechselrichterschaltung an den Servomotor gelangt, aufweisend die Schritte:
   - Überwachen eines mit der Eingangsschaltung verbundenen Stromkreises des Gleichspannungszwischenkreises auf Fließen eines elektrischen Stroms,
   - bei Auftreten eines Stopp-Signals, Ausschalten der ersten Schaltvorrichtung, um die Versorgung des Gleichspannungszwischenkreises aus dem elektrischen Netz zu beenden,
   - im Falle eines nach dem Ausschalten der ersten Schaltvorrichtung mittels der Überwachung festgestellten Nicht-Fließens eines elektrischen Stroms in dem mit der Eingangsschaltung verbundenen Stromkreis des Gleichspannungszwischenkreises, Bremsen des Servomotors durch Ansteuern der Leistungshalbleiterschalter der Wechselrichterschaltung in einem generatorischen Bremsbetrieb oder durch eine Kurzschlussbremsung, um die Drehzahl des Servomotors zu reduzieren,
   - im Falle eines nach dem Ausschalten der ersten Schaltvorrichtung mittels der Überwachung festgestellten Flie-βens eines elektrischen Stroms in dem mit der Eingangsschaltung verbundenen Stromkreis des Gleichspannungszwischenkreises, Ausschalten der zweiten Schaltvorrichtung, um ein Einspeisen von elektrischer Energie aus dem Gleichspannungszwischenkreises in den Servomotors zu unterbinden.

Obwohl als Umrichter im Allgemeinen Frequenzumrichter Verwendung finden, bei denen ein elektrisches Wechselspannungsnetz genutzt wird, welches den Gleichspannungszwischenkreis des Frequenzumrichters speist, kann die Erfindung auch bei Umrichtern genutzt werden, die von einem Gleichspannungsnetz gespeist werden. In diesem Falle ist eingangsseitig keine Gleichrichterschaltung nötig, da aufgrund des Gleichspannungsnetzes keine Wechselspannung gleichgerichtet werden muss, bevor die elektrische Energie dem Gleichspannungszwischenkreis zugeführt werden kann. Die Eingangsschaltung kann also sehr einfach aufgebaut sein und beispielsweise schon alleine von der ersten Schaltvorrichtung gebildet werden.

In den meisten aktuellen Anwendungen, in denen es noch nicht üblich ist, dass ein leistungsfähiges Gleichspannungsnetz zur Verfügung steht, kann die Erfindung in der Ausführungsform eines Frequenzumrichters realisiert werden, der von einem elektrischen Wechselspannungsnetz gespeist wird und der als eine Eingangsschaltung eine Gleichrichterschaltung aufweist.

Die Aufgabe kann somit speziell gelöst werden durch ein Verfahren, bei dem der Umrichter als ein Frequenzumrichter ausgebildet ist, das elektrische Netz ein Wechselspannungsnetz ist und die Eingangsschaltung als eine Gleichrichterschaltung ausgebildet ist, aufweisend die Schritte:
- Überwachen eines mit der Gleichrichterschaltung verbundenen Stromkreises des Gleichspannungszwischenkreises auf Fließen eines elektrischen Stroms,
- bei Auftreten eines Stopp-Signals, Ausschalten der ersten Schaltvorrichtung, um die Versorgung des Gleichspannungszwischenkreises aus dem elektrischen Wechselspannungsnetz zu beenden,
- im Falle eines nach dem Ausschalten der ersten Schaltvorrichtung mittels der Überwachung festgestellten Nicht-Fließens eines elektrischen Stroms in dem mit der Gleichrichterschaltung verbundenen Stromkreis des Gleichspannungszwischenkreises, Bremsen des Servomotors durch Ansteuern der Leistungshalbleiterschalter der Wechselrichterschaltung in einem generatorischen Bremsbetrieb oder durch eine Kurzschlussbremsung, um die Drehzahl des Servomotors zu reduzieren,
- im Falle eines nach dem Ausschalten der ersten Schaltvorrichtung mittels der Überwachung festgestellten Flie-βens eines elektrischen Stroms in dem mit der Gleichrichterschaltung verbundenen Stromkreis des Gleichspannungszwischenkreises, Ausschalten der zweiten Schaltvorrichtung, um ein Einspeisen von elektrischer Energie aus dem Gleichspannungszwischenkreises in den Servomotors zu unterbinden.

Im Falle eines Frequenzumrichters mit Speisung aus einem elektrischen Wechselspannungsnetz mit eingangsseitiger Gleichrichterschaltung kann vorgesehen sein, dass die Gleichrichterschaltung als ein gesteuerte Drehstrombrücke (B6C) ausgebildet ist, bei der als gleichrichtende Bauelemente Thyristoren statt Dioden verwendet werden. Thyristoren sind einschaltbare Bauelemente, die im Ausgangszustand nichtleitend, d.h. ausgeschaltet sind und durch einen Steuerstrom an der Gate-Elektrode des Thyristors eingeschaltet werden können. Nach dem Einschalten bleibt der Thyristor auch ohne einen an der Gate-Elektrode anstehenden Strom leitend, d.h. eingeschaltet. Der Thyristor wird durch Unterschreiten eines Mindestdurchgangsstroms, des sogenannten Haltestroms, ausgeschaltet. Insoweit ist in einer speziellen Ausführungsform vorgesehen, dass die erste Schalteinrichtung durch die ansteuerbaren Thyristoren der als gesteuerte Drehstrombrücke (B6C) ausgebildeten Gleichrichterschaltung gebildet wird.

In einer anderen Ausführung, insbesondere in einer Ausführung der Gleichrichterschaltung als eine ungesteuerte Drehstrombrücke (B6U) kann die Gleichrichterschaltung nicht steuerbare Dioden aufweisen und die erste Schalteinrichtung von separaten Schaltern gebildet werden. Auch diese von der Gleichrichterschaltung separaten Schalter können von Halbleiterbauelementen gebildet werden, aber gegebenenfalls auch von elektro-mechanischen Schaltern. Die von der Gleichrichterschaltung separaten Schalter können insbesondere den Vorteil haben, dass der Gleichspannungszwischenkreis galvanisch von dem elektrischen Netz getrennt werden kann.

Die Aufgabe wird daher insbesondere auch gelöst durch ein Verfahren zum Steuern wenigstens eines Servomotors mittels eines Frequenzumrichters, der umfasst:
- eine an ein elektrisches Wechselspannungsnetz angeschlossene Gleichrichterschaltung,
- einen aus der Gleichrichterschaltung speisbaren Gleichspannungszwischenkreis,
- eine erste Schaltvorrichtung, die ausgebildet ist, in ihrem eingeschalteten Zustand den Gleichspannungszwischenkreis mit elektrischer Energie aus der Gleichrichterschaltung zu speisen und in ihrem ausgeschalteten Zustand den Gleichspannungszwischenkreis von der Gleichrichterschaltung elektrisch zu trennen, so dass keine elektrische Energie aus der Gleichrichterschaltung in den Gleichspannungszwischenkreis gelangt,
- wenigstens eine aus dem Gleichspannungszwischenkreis speisbare Wechselrichterschaltung mit ansteuerbaren Leistungshalbleiterschaltern zum elektrischen Ansteuern des Servomotors, sowie
- eine zweite Schaltvorrichtung, die ausgebildet ist, in ihrem eingeschalteten Zustand den Servomotor mit elektrischer Energie aus der Wechselrichterschaltung zu speisen und in ihrem ausgeschalteten Zustand den Servomotor von der Wechselrichterschaltung elektrisch zu trennen, so dass keine elektrische Energie aus der Wechselrichterschaltung an den Servomotor gelangt, aufweisend die Schritte:
   - Überwachen eines mit der Gleichrichterschaltung verbundenen Stromkreises des Gleichspannungszwischenkreises auf Fließen eines elektrischen Stroms,
   - bei Auftreten eines Stopp-Signals, Ausschalten der ersten Schaltvorrichtung, um den Gleichspannungszwischenkreis von der Gleichrichterschaltung elektrisch zu trennen,
   - im Falle eines nach dem Ausschalten der ersten Schaltvorrichtung mittels der Überwachung festgestellten Nicht-Fließens eines elektrischen Stroms in dem mit der Gleichrichterschaltung verbundenen Stromkreis des Gleichspannungszwischenkreises, Bremsen des Servomotors durch Ansteuern der Leistungshalbleiterschalter der Wechselrichterschaltung in einem generatorischen Bremsbetrieb, um die Drehzahl des Servomotors zu reduzieren,
   - im Falle eines nach dem Ausschalten der ersten Schaltvorrichtung mittels der Überwachung festgestellten Flie-βens eines elektrischen Stroms in dem mit der Gleichrichterschaltung verbundenen Stromkreis des Gleichspannungszwischenkreises, Ausschalten der zweiten Schaltvorrichtung, um die Wechselrichterschaltung von dem Servomotor elektrisch zu trennen.

Das erfindungsgemäße Verfahren kann grundsätzlich in Ansteuerung eines einzigen Servomotors durchgeführt werden. Das erfindungsgemäße Verfahren kann jedoch insbesondere in Ansteuerung von wenigstens zwei Servomotoren durchgeführt werden. In der speziellen Ausgestaltung der Ansteuerung von Antrieben eines Roboterarms kann das erfindungsgemäße Verfahren beispielsweise in Ansteuerung von sechs oder sieben Servomotoren, welche die Antriebe eines Roboterarms bilden, durchgeführt werden.

Unter einem verfahrensgemäßen Bremsen wird erfindungsgemäß insbesondere verstanden, dass während der Durchführung des Verfahrens der eine Servomotor oder die mehreren Servomotoren weder durch mechanische Bremsen noch durch (elektro-) mechanische Bremsen, sondern während der Durchführung des Verfahrens insbesondere in einem die Wechselrichterschaltung aktiv angesteuerten generatorischen Betrieb des einen Servomotors oder der mehreren Servomotoren, allenfalls durch eine Kurzschlussbremsung elektrisch abgebremst werden. In einem solchen aktiv angesteuerten generatorischen Betrieb des einen Servomotors oder der mehreren Servomotoren wird somit die Wechselrichterschaltung aus dem Gleichspannungszwischenkreis mit elektrischer Energie gespeist, so dass durch einschaltendes und ausschaltendes Ansteuern der Leistungshalbleiterschalter der Wechselrichterschaltung entsprechende Wechselströme in die Wicklungen des einen Servomotors oder der mehreren Servomotoren eingeleitet werden können, die magnetische Felder erzeugen, welche abbremsende mechanische Kräfte an der Servomotorwelle bzw. an den Servomotorwellen bewirken. Unter einem Abbremsen ist die Reduzierung der Drehzahl der jeweiligen Servomotorwelle zu verstehen. Ein Abbremsen muss nicht notwendiger Weise bis zu einem vollständigen Stillstand der entsprechenden Servomotorwelle durchgeführt werden. Vielmehr kann ein Abbremsen lediglich von einer höheren ersten Drehzahl zu einer niedrigeren zweiten Drehzahl, die geringer ist als die erste Drehzahl, durchgeführt werden. Ein Abbremsen kann jedoch im Speziellen bis zu einem vollständigen Stillstand durchgeführt werden.

Im Falle von zwei oder mehr Servomotoren, die gemäß einem der erfindungsgemäßen Verfahren angesteuert werden, müssen nicht sämtliche Servomotoren gleichzeitig abbremsend angesteuert werden. Vielmehr kann zu beliebigen Zeitpunkten wahlweise eine erste Teilgruppe einer Untermenge von Servomotoren abbremsend angesteuert sein und eine zweite Teilgruppe einer anderen Untermenge von Servomotoren, stationär mit einer gleichbleibenden Geschwindigkeit, unangetrieben, d.h. in einem Leerlauf oder sogar beschleunigend angetrieben sein. In einem speziellen Zustand kann lediglich ein einziger Servomotor generatorisch abbremsend angesteuert sein und die sonstigen Servomotoren nicht generatorisch abbremsend angesteuert sein. In einem besonderen Zustand können alle Servomotoren gleichzeitig generatorisch abbremsend angesteuert sein.

Der wenigstens eine Servomotor wird mittels des erfindungsgemäßen Frequenzumrichters in seiner Position (die Motorposition, d.h. die momentane Winkelstellung der Motorwelle), in seiner Drehzahl, in seiner Beschleunigung und/oder seinem Bremsverhalten (negative Beschleunigung) elektrisch angesteuert. Im Falle von zwei oder mehr Servomotoren weist der Frequenzumrichter eine der Anzahl der Servomotoren entsprechende Anzahl von Wechselrichterschaltungen auf. Die mehreren Wechselrichterschaltungen können dabei an einen gemeinsamen Gleichspannungszwischenkreis angeschlossen sein. Der gemeinsame Gleichspannungszwischenkreis wird dann von einer gemeinsamen Gleichrichterschaltung aus demselben elektrischen Wechselspannungsnetz gespeist, wenn der Frequenzumrichter an das elektrische Wechselspannungsnetz angeschlossen ist.

Das elektrische Wechselspannungsnetz stellt elektrische Energie aus einem Stromnetz eines Energieversorgers bereit. Im Allgemeinen wird dies ein Niederspannungsnetz sein. Das Niederspannungsnetz kann insbesondere ein Dreiphasenwechselspannungsnetz sein. Das Dreiphasenwechselspannungsnetz liefert eine sinusförmige Netzwechselspannung. Diese sinusförmige Netzwechselspannung kann insbesondere einen Effektivwert aufweisen, bei dem zwischen einem Außenleiter des Dreiphasenwechselspannungsnetzes und einem Neutralleiter des Dreiphasenwechselspannungsnetzes eine Spannung von beispielsweise 230 Volt und zwischen jeweils zwei der drei Außenleitern eine Spannung von beispielsweise 400 Volt anliegt. Die Netzfrequenz kann beispielsweise 50 Hertz oder 60 Hertz betragen. Das Dreiphasenwechselspannungsnetz kann insbesondere als ein TN-System konfiguriert sein, das drei Außenleiter (L1, L2, L3), einen Neutralleiter (N) und einen Schutzleiter (PE) umfasst.

Die Gleichrichterschaltung des Frequenzumrichters kann beispielsweise ein Dreiphasengleichrichter sein. Der Dreiphasengleichrichter kann in der Bauart einer ungesteuerten Drehstrombrücke realisiert sein.

Der Gleichspannungszwischenkreis wird aus dem elektrischen Wechselspannungsnetz mit elektrischer Energie gespeist, wenn der Frequenzumrichter an das elektrische Wechselspannungsnetz angeschlossen ist. Wenn der Gleichspannungszwischenkreis vom elektrischen Wechselspannungsnetz getrennt ist, wird der Gleichspannungszwischenkreis ausschließlich durch elektrische Energie aus der Wechselrichterschaltung versorgt, die in einem generatorischen Betrieb des wenigstens einen Servomotors elektrische Energie liefern kann.

In den Betriebszeiten, in denen das erfindungsgemäße Verfahren durchgeführt werden kann, kann elektrische Energie außerdem vom Zwischenkreiskondensator abgegeben werden und zwar entweder an die Wechselrichterschaltung oder an einen Bremswiderstand des Gleichspannungszwischenkreises.

Der Bremswiderstand ist in einem solchen Fall ausgebildet, in seinem an den Gleichspannungszwischenkreis zugeschalteten Zustand elektrische Energie aus dem Gleichspannungszwischenkreis zu entnehmen und in Wärme umzuwandeln. In seinem vom Gleichspannungszwischenkreis getrennten Zustand hat der Bremswiderstand auf den Gleichspannungszwischenkreis keine elektrische Wirkung, d.h. der Gleichspannungszwischenkreis bleibt im getrennten Zustand des Bremswiderstands vom Bremswiderstand unbeeinflusst. Ein Brems-Chopper, über den der Bremswiderstand dem Gleichspannungszwischenkreis zugeschaltet und/oder getrennt werden kann, ist ein ansteuerbarer Schalter. Der Brems-Chopper kann insoweit pulsweitengesteuert betrieben sein.

Die aus dem Gleichspannungszwischenkreis gespeiste Wechselrichterschaltung umfasst Leistungshalbleiterschalter, die elektronisch, beispielsweise von zugeordneten Treiberschaltungen angesteuert sein können. Die Wechselrichterschaltung kann ein Dreiphasen-Wechselrichter sein und beispielsweise als ein Zweistufen-Wechselrichter (U-Umrichter) oder ein Pulswechselrichter ausgebildet sein. In der Wechselrichterschaltung führen die Leistungshalbleiterschalter die elektrische Energie an den Servomotor, wenn Strom und Spannung das gleiche Vorzeichen haben. Die elektrische Energie fließt somit vom Gleichspannungszwischenkreis ab und in den Servomotor hinein. In einem generatorischen Betrieb kann vorgesehen sein, dass nicht die den Leistungshalbleiterschaltern zugeordneten Freilaufdioden die elektrische Energie abführen, um generatorische Energie aus dem Servomotor bzw. den Servomotoren in den Gleichspannungszwischenkreis d.h. in den Zwischenkreiskondensator zurückzuliefern, sondern die Leistungshalbleiterschalter können aktiv bleiben und können entsprechend von den Leistungshalbleiterschaltern zugeordneten Treiberschaltungen angesteuert werden, um elektrische Energie von den Servomotoren abzuziehen und in den Gleichspannungszwischenkreis d.h. in den Zwischenkreiskondensator einzuspeisen.

Bei dem erfindungsgemäßen Verfahren erfolgt ein Trennen des Gleichspannungszwischenkreises vom elektrischen Wechselspannungsnetz. Dies ist beispielsweise im Falle einer Notabschaltung der jeweiligen Maschine, die von dem wenigstens einen Servomotor angetrieben wird, zumindest zweckmäßig oder sogar im Hinblick auf bestimmte zu beachtende Sicherheitsanforderungen zwingend erforderlich.

So ist beispielsweise bei Industrierobotern im Falle eines Not-Halts der Stopp-Kategorie 0 (z.B. gemäß Norm EN 60204-1) eine sofortige Unterbrechung der elektrischen Energieversorgung vorgeschrieben, insbesondere wenn beispielsweise eine mechanische Trennung d.h. ein Auskuppeln im Antriebstrang und/oder ein mechanisches Bremsen alleine nicht möglich ist.

Andererseits kann eine Maschine, wie der beispielhafte Industrieroboter Systemzustände aufweisen, in denen eine gesteuerte Drehzahlreduzierung der Servomotoren, insbesondere bis auf einen Stillstand bei der Drehzahl Null, schneller erfolgt, als durch eine bloße mechanische Bremsung, bei der die Servomotoren nicht geregelt in ihren Drehzahlen heruntergefahren werden. In einem solchen Fall kann ein Halt der Stopp-Kategorie 0 oder der Stopp-Kategorie 1 (z.B. gemäß Norm EN 60204-1) durchgeführt werden, bei dem ein gesteuertes Stillsetzen der Maschine durchgeführt wird, wobei die Zufuhr von elektrischer Energie zu den Servomotoren beibehalten wird, um das gesteuerte Stillsetzen zu ermöglichen. Die Zufuhr von elektrischer Energie wird erst dann unterbrochen, wenn der Stillstand des Servomotors oder der mehreren Servomotoren erreicht ist.

Sowohl für den Not-Halt der Stopp-Kategorie 0, als auch für den Halt der Stopp-Kategorie 1 kann jedoch vorgesehen sein, dass eine den Servomotoren zugeordnete bzw. in den Servoantrieben integrierte STO-Funktionalität (Safe-Torque-Off nach Norm EN 61800-5-2) zusätzlich genutzt wird.

Die erste Schaltvorrichtung kann ein erstes Relais, insbesondere ein erstes Relais mit zwangsgeführten Schaltkontakten, ein erstes Schaltschütz, insbesondere mit doppelt oder mehrfach unterbrechenden Schaltkontakten sein. Alternativ oder ergänzend kann die zweite Schaltvorrichtung ein zweites Relais, insbesondere ein zweites Relais mit zwangsgeführten Schaltkontakten, ein zweites Schaltschütz, insbesondere mit doppelt oder mehrfach unterbrechenden Schaltkontakten sein.

Obwohl die erste Schaltvorrichtung und auch die zweite Schaltvorrichtung im Allgemeinen als mechanische Schalter ausgebildet sein können, wird in einer erfindungsgemäßen Weiterbildung speziell vorgeschlagen, die erste Schaltvorrichtung als eine erste Halbleiterschaltvorrichtung auszubilden und/oder die zweite Schaltvorrichtung als eine zweite Halbleiterschaltvorrichtung auszubilden. In der Ausbildung als eine Halbleiterschaltvorrichtung kann die erste Halbleiterschaltvorrichtung und/oder die zweite Halbleiterschaltvorrichtung beispielsweise einen oder mehrere Transistoren, insbesondere MOS-FETs und/oder einen oder mehrere Thyristoren, insbesondere GTO-Thyristoren umfassen.

Je nach Ausführungsform kann die erste Schaltvorrichtung insbesondere durch die ansteuerbaren Thyristoren der als gesteuerte Drehstrombrücke (B6C) ausgebildeten Gleichrichterschaltung gebildet werden. Alternativ oder ergänzend kann die zweite Schaltvorrichtung insbesondere durch die Leistungshalbleiterschalter der Wechselrichterschaltung des Umrichters gebildet werden. Insofern können separate Schalter, d.h. von der Gleichrichterschaltung und/oder von der Wechselrichterschaltung verschiedene Schalter entfallen.

Sowohl in der Ausbildung als relaisartige, elektromechanische Schalter, als auch in der Ausbildung als Halbleiterschaltvorrichtungen können die erste Schaltvorrichtung und die zweite Schaltvorrichtung einfach schaltend, d.h. nicht redundant schaltend ausgebildet sein.

Die erste Schaltvorrichtung, insbesondere die erste Halbleiterschaltvorrichtung kann in dem Schaltkreis der Gleichrichterschaltung und dem Gleichspannungszwischenkreis derart schaltend konfiguriert sein, dass auch bei einem ausgeschalteten Zustand der ersten Schaltvorrichtung die Gleichrichterschaltung weiterhin an das elektrische Wechselspannungsnetz angeschlossen bleibt.

Je nach konstruktiver Ausführung der elektro-mechanischen Relais und jedenfalls in der Ausführung als Halbleiterschaltvorrichtungen trennen die erste Schaltvorrichtung und die zweite Schaltvorrichtung in nicht sicherer Weise, da ggf. keine galvanische Trennung vom Wechselspannungsnetz erfolgt.

Bei einer speziellen Ausführung des Verfahrens wird deshalb eine sichere Halt-Funktion dadurch erreicht, dass ein Überwachen des mit der Gleichrichterschaltung verbundenen Stromkreises des Gleichspannungszwischenkreises auf Fließen eines elektrischen Stroms erfolgt. Bei Auftreten eines Stopp-Signals wird ein Ausschalten der ersten Schaltvorrichtung durchgeführt, um den Gleichspannungszwischenkreis von der Gleichrichterschaltung elektrisch zu trennen. Wenn das Überwachen des mit der Gleichrichterschaltung verbundenen Stromkreises des Gleichspannungszwischenkreises auf Fließen eines elektrischen Stroms dann nach dem Ausschalten der ersten Schaltvorrichtung mittels der Überwachung des festgestellten Nicht-Fließens eines elektrischen Stroms in dem mit der Gleichrichterschaltung verbundenen Stromkreis des Gleichspannungszwischenkreises feststellt, wird ein Bremsen des Servomotors durch Ansteuern der Leistungshalbleiterschalter der Wechselrichterschaltung in einem generatorischen Bremsbetrieb durchgeführt, um die Drehzahl des Servomotors zu reduzieren. Wenn jedoch das Überwachen des mit der Gleichrichterschaltung verbundenen Stromkreises des Gleichspannungszwischenkreises auf Fließen eines elektrischen Stroms nach dem Ausschalten der ersten Schaltvorrichtung ein Fließen eines elektrischen Stroms in dem mit der Gleichrichterschaltung verbundenen Stromkreis des Gleichspannungszwischenkreises feststellt d.h. die Überwachung trotz Ausschalten weiterhin einen elektrischen Strom feststellt, wird eine STO-Funktionalität (Safe-Torque-Off nach Norm EN 61800) aktiviert, welche die elektrische Energieversorgung zu dem Servomotor bzw. zu den Servomotoren direkt unterbricht.

In bekannten geregelten Antriebssystemen mit Zwischenkreis wird zur Erreichung von bestimmten Anforderungen an die funktionale Sicherheit eine Abschaltung des Energieflusses vom Versorgungssystem d.h. vom Wechselspannungsnetz über den Zwischenkreis in das antreibende System d.h. die Servomotoren benötigt. Im Stand der Technik wird die Abschaltung des Energieflusses in das antreibende System über ein Schaltelement am Eingang der Gleichrichterschaltung d.h. über eine Einspeiseeinheit realisiert. Als Schaltelement können dabei elektromechanische oder elektronische Elemente zum Einsatz kommen.

Bei der Abschaltung des Energieflusses durch die Einspeiseeinheit muss diese jedoch, entsprechend der Anforderungen an funktionale Sicherheit, überwacht oder auch redundant ausgeführt werden. Eine direkte Überwachung des Energieflusses findet nach dem bekannten Stand der Technik nicht statt.

Alternativ kann der Energiefluss durch die Stelleinrichtung abgeschaltet werden. In diesem Fall kann die Stelleinrichtung allerdings nicht genutzt werden um das antreibende System schnell still zu setzen z.B. einen Rampenstopp durchzuführen.

Sofern die Einspeiseeinheit über ein elektromechanisches Schaltglied (z.B. ein Hauptschütz) verfügt, kann eine sicherheitsgerichtete Abschaltung über dieses Schütz erfolgen. Bei einer Ausführung der Einspeiseeinheit aus einem Dioden-Gleichrichter oder einer halbgesteuerten Thyristor-Brücke ohne weiteres Schaltelement kann jedoch keine Abschaltung der Energieversorgung nach den Regeln der funktionalen Sicherheit erfolgen.

Mit dem erfindungsgemäßen Verfahren kann ggf. eine sicherheitsgerichtete Energieabschaltung in der Einspeiseeinheit d.h. an der Gleichrichterschaltung erfolgen und zwar insbesondere auf der Basis von Halbleiter-Bauelementen bzw. ohne Zusatz von elektro-mechanischen Schaltern.

Auf elektromechanische Schaltglieder soll auf Grund von Verschleiß und geringer Zuverlässigkeit möglichst bzw. weitgehend verzichtet werden.

Gegenüber dem Stand der Technik wird der Energiefluss von der Einspeiseeinheit in den Zwischenkreis überwacht. Die Abschaltung des Energieflusses in das antreibende System erfolgt über einen insbesondere nicht-redundanten Schalter in der Einspeiseeinheit d.h. insbesondere über die Thyristoren der als gesteuerte Drehstrombrücke (B6C) ausgebildeten Gleichrichterschaltung. Durch Abschaltung des Energieflusses in Kombination mit einer Überwachung dieses Energieflusses kann die Stelleinrichtung noch kontrolliert geregelt werden, anstatt sonst nur abgeschaltet zu werden. Der Vorteil gegenüber dem Stand der Technik ist das schnellere und je nach Betriebsfall angepasste Stillsetzen des antreibenden Systems.

Die Abschaltung des Energieflusses erfolgt an der Einspeiseeinheit. Der Energiefluss wird durch eine Messeinrichtung im Zwischenkreis auf null oder einen definierten Schwellwert überwacht. Diese Überwachung kann durch eine Messeinrichtung im Hinstrom bzw. im Rückstrom oder in beiden gleichzeitig erfolgen. Wenn der Energiefluss von der Einspeiseeinheit in den Zwischenkreis null ist, kann das antreibende System über eine Stelleinrichtung noch kontrolliert mit der Restenergie des Zwischenkreises heruntergeregelt werden.

Die Messeinrichtung kann im laufenden Betrieb ständig überwacht werden, da der Energiefluss hier durchgehend erfasst wird. Die Funktionsfähigkeit der Messeinrichtung kann somit ständig plausibilisiert werden. Wird mittels der Messeinrichtung festgestellt, dass die Einspeiseeinheit nicht korrekt den Energiefluss aus dem Versorgungssystem getrennt hat, dann kann immer noch über eine zweite Stelleinrichtung an der Wechselrichterschaltung direkt abgeschaltet werden.

Das Überwachen des an die Gleichrichterschaltung angeschlossenen Stromkreises des Gleichspannungszwischenkreises auf Fließen eines elektrischen Stroms kann durch eine einfache Strommessung in einer der beiden die Gleichrichterschaltung mit dem Gleichspannungszwischenkreis verbindenden Leitungen des Stromkreises durchgeführt werden.

Die Strommessung kann beispielsweise mittels eines oder mehrerer vom Stromkreis galvanisch getrennter Stromsensoren oder mittels eines oder mehrerer an den Stromkreis angeschlossener Messwiderstände (Shunt) durchgeführt werden. Der Stromsensor bzw. die Stromsensoren oder der Messwiderstand bzw. die Messwiderstände können dabei an die Steuervorrichtung angeschlossen sein, welche die Überwachung und/oder Auswertung vornimmt.

Alternativ kann das Überwachen des an die Gleichrichterschaltung angeschlossenen Stromkreises des Gleichspannungszwischenkreises auf Fließen eines elektrischen Stroms durch eine zweifache Strommessung und zwar sowohl in der die Gleichrichterschaltung mit dem Gleichspannungszwischenkreis verbindenden einen Leitung (Hinleitung) des Stromkreises, als auch in der die Gleichrichterschaltung mit dem Gleichspannungszwischenkreis verbindenden anderen Leitung (Rückleitung) des Stromkreises redundant durchgeführt werden.

Die insoweit redundante Strommessung kann beispielsweise mittels zweier oder mehrerer vom Stromkreis galvanisch getrennter Stromsensoren oder mittels zweier oder mehrerer an den Stromkreis angeschlossener Messwiderstände (Shunt) durchgeführt werden. Die Stromsensoren und/oder die Messwiderstände können dabei optional außerdem diversitär ausgeführt sein. So können beispielsweise für eine redundante Strommessung ein Stromsensor und ein Messwiderstand vorgesehen sein.

In allen Ausführungsvarianten des Verfahrens kann das Überwachen des mit der Gleichrichterschaltung verbundenen Stromkreises des Gleichspannungszwischenkreises auf Fließen eines elektrischen Stroms im laufenden Betrieb des Frequenzumrichters auch während des betriebsgemäßen Ansteuerns des Servomotors unabhängig von dem Vorliegen eines Stopp-Signals durchgeführt werden. Das Überwachen während des betriebsgemäßen Ansteuerns des Servomotors unabhängig von dem Vorliegen eines Stopp-Signals kann intermittierend, d.h. ist diskreten Zeitabständen, insbesondere gleichmäßigen Zeitabständen durchgeführt werden. Alternativ kann das Überwachen während des betriebsgemäßen Ansteuerns des Servomotors unabhängig von dem Vorliegen eines Stopp-Signals kontinuierlich, d.h. unterbrechungsfrei oder andauernd durchgeführt werden.

Indem das Überwachen des mit der Gleichrichterschaltung verbundenen Stromkreises des Gleichspannungszwischenkreises auf Fließen eines elektrischen Stroms im laufenden Betrieb des Frequenzumrichters auch während des betriebsgemäßen Ansteuerns des Servomotors unabhängig von dem Vorliegen eines Stopp-Signals durchgeführt wird, kann eine laufende Plausibilitätsprüfung an den Stromsensoren und/oder den Messwiderständen durchgeführt werden. So kann im betriebsgemäßen Ansteuerns des wenigstens einen Servomotors die aufgrund der momentanen Ansteuerung benötigte bzw. erforderliche elektrische Energie bestimmt sein und sich daraus der momentan benötige elektrische Strom in seiner nominalen Größe ableiten und mit den von den Stromsensoren und/oder den Messwiderständen erfassten Stromwerten vergleichen. Im Falle einer Abweichung der gemessenen Stromwerte von den erwarteten Stromwerten über eine tolerierbaren Unterschied hinaus, kann auf eine Fehlfunktion der Strommessung, insbesondere auf eine Fehlfunktion der Stromsensoren und/oder den Messwiderständen geschlossen werden. Folglich kann die Sicherheit des Überwachung bzw. der Strommessung laufend überprüft werden und im Falle einer Fehlfunktion somit ein sicherer Zustand eingeleitet werden, auch zu Zeitpunkten zu denen die Stopp-Funktion noch nicht ausgelöst ist.

Der Betrag der Stromstärke in einer Hinleitung im Gleichspannungszwischenkreis kann mit dem Betrag der Stromstärke in einer Rückleitung im Gleichspannungszwischenkreis direkt auf Gleichheit verglichen werden, oder es können die durch das Überwachen des mit der Gleichrichterschaltung verbundenen Stromkreises des Gleichspannungszwischenkreises auf Fließen eines elektrischen Stroms erfassten Stromverläufe mit Ansteuersignalen für den Frequenzumrichter und/oder mit Strom-und/oder Spannungsverläufen zwischen der Wechselrichterschaltung und dem Servomotor verglichen werden, wobei aus dem Vergleich eine Information über die Funktionsfähigkeit einer die Überwachung durchführenden elektrischen Komponente abgeleitet werden kann. In einer bevorzugten Art der Überwachung kann der Betrag der Stromstärke in einer Hinleitung im Gleichspannungszwischenkreis mit dem Betrag der Stromstärke in einer Rückleitung im Gleichspannungszwischenkreis direkt auf Gleichheit verglichen werden.

Die eine Überwachung durchführende elektrische Komponente kann beispielsweise ein vom Stromkreis galvanisch getrennter Stromsensor oder ein an den Stromkreis angeschlossener Messwiderstand (Shunt) sein.

Die erfindungsgemäße Aufgabe wird auch gelöst durch eine Steuervorrichtung zum Steuern wenigstens eines Servomotors mittels eines Frequenzumrichters, aufweisend eine Erfassungseinrichtung zum Erfassen von Strom- und/oder Spannungsverläufen in einem mit einer Gleichrichterschaltung des Frequenzumrichters verbundenen Stromkreis eines Gleichspannungszwischenkreises des Frequenzumrichters, einen Signaleingang zum Aufnehmen eines Stopp-Signals einer den Servomotor steuernden Maschinensteuerung, einen ersten Signalausgang zum Ansteuern einer ersten Schaltvorrichtung des Frequenzumrichters, die ausgebildet ist, in ihrem eingeschalteten Zustand den Gleichspannungszwischenkreis mit elektrischer Energie aus der Gleichrichterschaltung zu speisen und in ihrem ausgeschalteten Zustand den Gleichspannungszwischenkreis von der Gleichrichterschaltung elektrisch zu trennen, so dass keine elektrische Energie aus der Gleichrichterschaltung in den Gleichspannungszwischenkreis gelangt, und einen zweiten Signalausgang zum Ansteuern einer zweiten Schaltvorrichtung des Frequenzumrichters, die ausgebildet ist, in ihrem eingeschalteten Zustand den Servomotor mit elektrischer Energie aus einer Wechselrichterschaltung des Frequenzumrichters zu speisen und in ihrem ausgeschalteten Zustand den Servomotor von der Wechselrichterschaltung elektrisch zu trennen, so dass keine elektrische Energie aus der Wechselrichterschaltung an den Servomotor gelangt, wobei die Steuervorrichtung ausgebildet ist, ein erfindungsgemäßes Verfahren nach einem oder mehreren der beschriebenen Ausführungen durchzuführen.

Die Steuervorrichtung kann eine Erfassungseinrichtung aufweisen, die wenigstens einen Stromsensor umfasst, wobei die Erfassungseinrichtung ausgebildet ist, eine einfache Strommessung in einer der beiden die Gleichrichterschaltung mit dem Gleichspannungszwischenkreis verbindenden Leitungen des Stromkreises durchzuführen.

Die Erfassungseinrichtung kann beispielsweise Messwerte eines oder mehrerer vom Stromkreis galvanisch getrennter Stromsensoren oder Messwerte eines oder mehrerer an den Stromkreis angeschlossener Messwiderstände (Shunt) aufnehmen d.h. erfassen. Der Stromsensor bzw. die Stromsensoren oder der Messwiderstand bzw. die Messwiderstände können dabei an die Steuervorrichtung angeschlossen sein, welche die Überwachung und/oder Auswertung vornimmt.

Die Steuervorrichtung kann eine Erfassungseinrichtung aufweisen, die zwei Stromsensoren umfasst, wobei die Erfassungseinrichtung ausgebildet ist, eine zweifache Strommessung sowohl in der die Gleichrichterschaltung mit dem Gleichspannungszwischenkreis verbindenden einen Leitung des Stromkreises, als auch in der die Gleichrichterschaltung mit dem Gleichspannungszwischenkreis verbindenden anderen Leitung des Stromkreises redundant und/oder diversitär durchzuführen.

Die insoweit redundant aufgebaute Erfassungseinrichtung kann beispielsweise Messwerte von zwei oder mehreren vom Stromkreis galvanisch getrennten Stromsensoren oder Messwerte von zwei oder mehreren an den Stromkreis angeschlossenen Messwiderstände (Shunt) aufnehmen d.h. erfassen. Die Stromsensoren und/oder die Messwiderstände können dabei an die Steuervorrichtung angeschlossen sein, welche die Überwachung und/oder Auswertung vornimmt. Die Stromsensoren und/oder die Messwiderstände können dabei optional außerdem diversitär ausgeführt sein. So können beispielsweise für eine redundante Strommessung ein Stromsensor und ein Messwiderstand vorgesehen sein.

Im Anwendungsfall eines beispielhaften Roboterarms kann der Roboterarm mehrere Gelenke und mehrere Glieder aufweisen, die durch die Bewegungen der Gelenke des Roboterarms gegeneinander verstellbar sind. Dabei kann jedem Gelenk ein eigener Servomotor zugeordnet sein. Jeder dieser mehreren Servomotoren ist ausgebildet, das jeweils ihm zugeordnete Gelenk des Roboterarms zu verstellen und zwar durch automatisches Ansteuern des Servomotors. Der Roboterarm kann dazu eine Steuervorrichtung aufweisen, die ausgebildet ist zum automatischen Ansteuern der Servomotoren des Roboterarms, um die Glieder des Roboterarms durch angetriebenes Bewegen der Gelenke automatisch gegeneinander zu verstellen.

Jedes Gelenk und damit jeder diesem jeweiligen Gelenk zugeordnete Servomotor bewegt ein kinematisches System, das jeweils durch das diesem Servomotor in der kinematischen Kette des Roboterarms vorgelagerte, distale kinematische Teilsystem gebildet wird. So müssen die in der kinematischen Kette eher proximal angeordneten Servomotoren (Servomotoren der Grundachsen des Roboterarms) im Allgemeinen eine höhere kinetische Energie abbremsen, als die eher distal angeordneten Servomotoren (Servomotoren der Handachsen des Roboterarms). Je nach Pose der Gelenke des Roboterarms kann jedoch zu jedem beliebigen Zeitpunkt ein anderer Servomotor mit der momentan höchsten Bremslast belastet sein. So kann beispielsweise eine Situation auftreten, wo ein sich gerade entgegen der Schwerkraft nach oben bewegendes Grundgelenk abgebremst werden soll und somit die Bremskraft weitgehend durch die Schwerkraft bereitgestellt wird und der zugeordnete Servomotor somit keiner besonderen elektrischen Bremslast ausgesetzt ist. Andererseits kann ein eher leichtes Handgelenk des Roboterarms sich gerade in Schwerkraftrichtung bewegen, so dass beim Abbremsen der einwirkenden Erdbeschleunigung zusätzlich durch den Servomotor entgegengewirkt werden muss und somit dieser dem leichteren Handgelenk zugeordnete Servomotor einer besonders hohen elektrischen Bremslast ausgesetzt ist.

Die erfindungsgemäße Aufgabe wird insbesondere gelöst durch einen Roboter, aufweisend einen Roboterarm mit mehreren Gelenken und mehreren Gliedern, die durch die Bewegungen der Gelenke des Roboterarms gegeneinander verstellbar sind, wobei wenigstens einem der Gelenke ein Servomotor zugeordnet ist, welcher ausgebildet ist, das wenigstens eine Gelenk zu verstellen und zwar durch automatisches Ansteuern des Servomotors, und aufweisend eine Robotersteuerung, die ausgebildet ist zum automatischen Ansteuern wenigstens eines Servomotors des Roboterarms, um die Glieder des Roboterarms durch angetriebenes Bewegen der Gelenke automatisch gegeneinander zu verstellen, wobei die Robotersteuerung eine erfindungsgemäße Steuervorrichtung, wie nach einer oder mehreren Ausführungsformen beschrieben, umfasst oder mit einer Steuervorrichtung, wie nach einer oder mehreren Ausführungsformen beschrieben, steuerungstechnisch verbunden ist.

Der wenigstens eine Servomotor kann speziell eine permanentmagnet-erregte Synchronmaschine sein.

Die Steuervorrichtung kann als ein Teil einer Robotersteuerung ausgebildet sein. Alternativ kann die Steuervorrichtung jedoch auch als separate Steuereinheit ausgebildet sein, die mit der Robotersteuerung zusammenwirkt, beispielsweise mittels einer Kommunikationsverbindung. Die Steuervorrichtung ist insbesondere ausgebildet einen Frequenzumrichter anzusteuern, der eine an ein elektrisches Wechselspannungsnetz anschließbare Gleichrichterschaltung, einen im an das elektrische Wechselspannungsnetz angeschlossenen Zustand aus dem elektrischen Wechselspannungsnetz gespeisten Gleichspannungszwischenkreis mit einem Zwischenkreiskondensator und mit einem über einen Brems-Chopper des Gleichspannungszwischenkreises zuschalt- und trennbaren Bremswiderstand, und wenigstens eine aus dem Gleichspannungszwischenkreis gespeiste Wechselrichterschaltung mit ansteuerbaren Leistungshalbleiterschaltern umfasst.

Die erfindungsgemäße Aufgabe wird außerdem gelöst durch ein Computerprogrammprodukt aufweisend einen maschinenlesbaren Träger, auf dem Programmcode gespeichert ist, der von einer erfindungsgemäßen Steuervorrichtung, wie nach einer oder mehreren Ausführungsformen beschrieben, auslesbar ist und der die Steuervorrichtung ausbildet und/oder einrichtet, ein erfindungsgemäßes Verfahren, wie nach einer oder mehreren Ausführungsformen beschrieben, durchzuführen, wenn der Programmcode von der Steuervorrichtung ausgeführt wird.

Das Computerprogrammprodukt kann beispielsweise eine CD, eine DVD oder ein USB-Stick sein. Das Computerprogrammprodukt kann aber auch eine Steuerungskarte sein, auf der Mikroprozessoren eingebunden sind. Das Computerprogrammprodukt kann jedoch auch in Form eines Downloads realisiert sein, der über das Internet oder ein anderes Netzwerk angeboten und verkauft werden kann.

Der maschinenlesbare Träger kann somit eine CD, eine DVD oder ein Mikroprozessor sein, auf dem der Programmcode gespeichert ist. Der maschinenlesbare Träger kann aber auch eine Festplatte oder ein SSD-Laufwerk sein, auf das der Programmcode heruntergeladen wurde, beispielsweise mittels eines Downloads, insbesondere in Form von Datenpaketen.

Der Programmcode kann durch ein editiertes Programm und/oder Daten repräsentiert sein, die auf dem maschinenlesbaren Träger gespeichert sind.

Durch ein Auslesen des editiertes Programm und/oder der Daten wird die auslesende Steuervorrichtung ausbildet und/oder einrichtet, das erfindungsgemäße Verfahren ausführen zu können.

Das erfindungsgemäße Verfahren wird durchgeführt, wenn die Steuervorrichtung den Programmcode d.h. das editierte Programm tatsächlich entsprechend ausführt und/oder die Daten tatsächlich entsprechend verarbeitet.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: ein Ablaufschema eines beispielhaften, erfindungsgemäßen Verfahrens,
- Fig. 2: eine Seitenansicht eines beispielhaften Industrieroboters, der einen Roboterarm mit Gliedern, Gelenken und Servomotoren umfasst, und der eine Robotersteuerung aufweist, die ausgebildet ist, ein erfindungsgemäßes Verfahren durchzuführen,
- Fig. 3: eine schematische Darstellung eines Schaltbildes eines beispielhaften Frequenzumrichters mit einem beispielhaften einzigen Servomotor und einer durch die Thyristoren der Gleichrichterschaltung realisierten ersten Schaltvorrichtung,
- Fig. 4: eine schematische Darstellung eines Schaltbildes eines abgewandelten Frequenzumrichters mit einem Servomotor und einer von der Gleichrichterschaltung separaten ersten Schaltvorrichtung und einer von der Wechselrichterschaltung separaten zweiten Schaltvorrichtung, und
- Fig. 5: eine schematische Darstellung eines Schaltbildes eines beispielhaften abgewandelten Frequenzumrichters mit zwei oder mehreren Servomotoren, die an einem gemeinsamen Gleichspannungszwischenkreis, beispielsweise gemäß Fig. 3 angeschlossen sind.

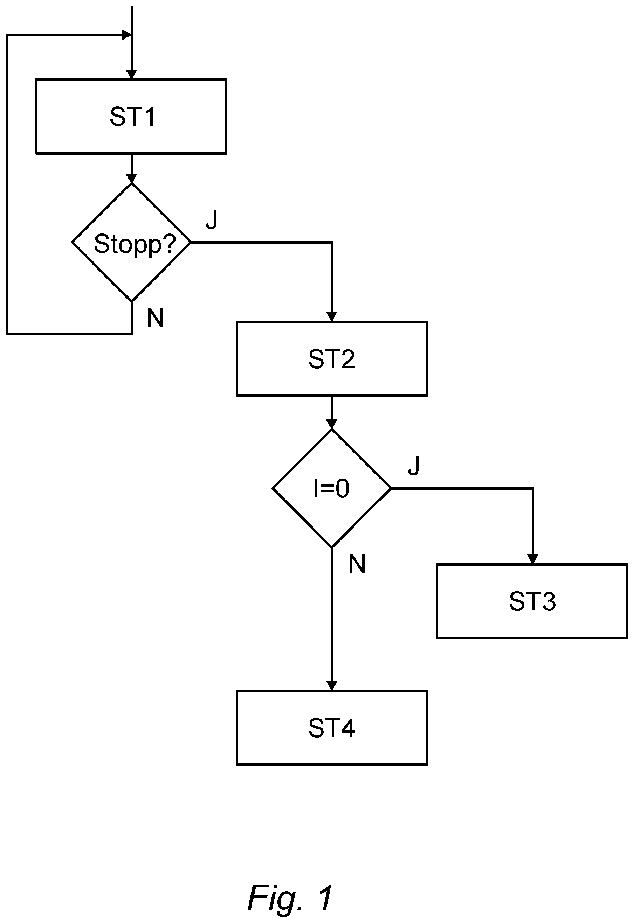

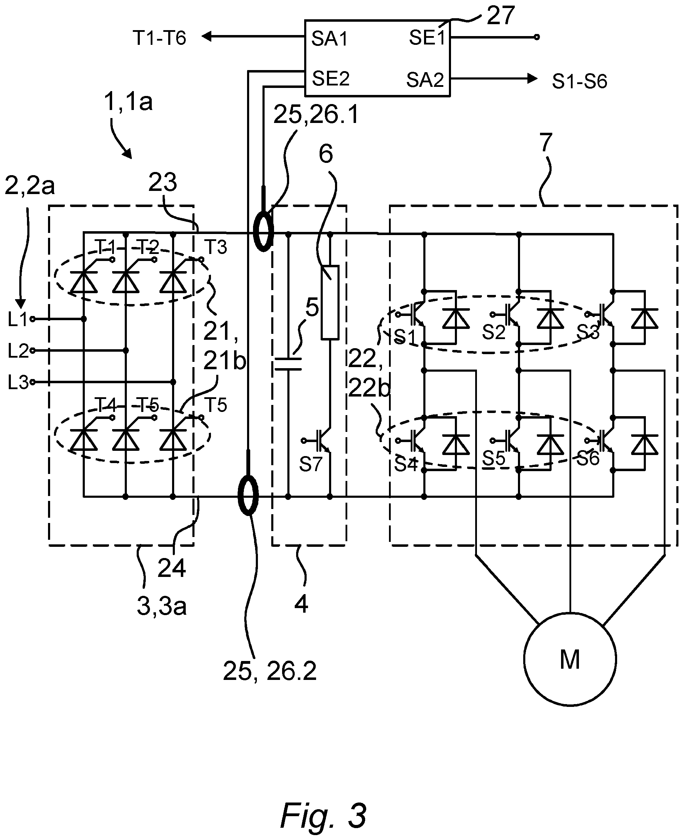

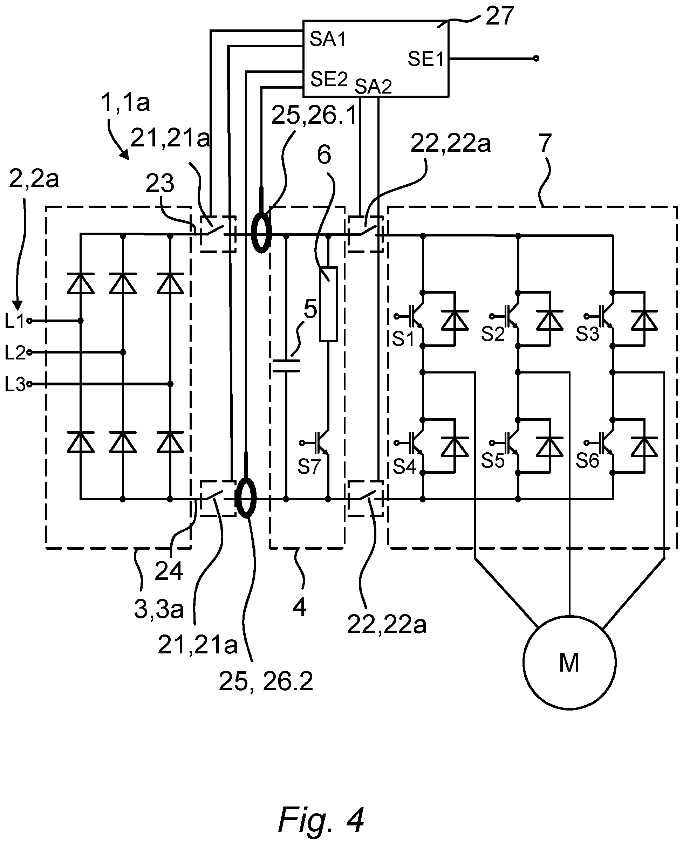

In Fig. 1 ist schematisch der Ablauf eines beispielhaften, erfindungsgemäßen Verfahrens zum Steuern wenigstens eines Servomotors M mittels eines Frequenzumrichters 1 (Fig. 3, Fig. 4) dargestellt.

Der Frequenzumrichter 1 kann, wie in Fig. 3 und Fig. 4 aufgezeigt ist, umfassen:
Eine an ein elektrisches Wechselspannungsnetz 2 angeschlossene Gleichrichterschaltung 3; einen aus der Gleichrichterschaltung 3 speisbaren Gleichspannungszwischenkreis 4; eine erste Schaltvorrichtung 21, die ausgebildet ist, in ihrem eingeschalteten Zustand den Gleichspannungszwischenkreis 4 mit elektrischer Energie aus der Gleichrichterschaltung 3 zu speisen und in ihrem ausgeschalteten Zustand den Gleichspannungszwischenkreis 4 von der Gleichrichterschaltung 3 elektrisch zu trennen, so dass keine elektrische Energie aus der Gleichrichterschaltung 3 in den Gleichspannungszwischenkreis 4 gelangt; wenigstens eine aus dem Gleichspannungszwischenkreis 4 speisbare Wechselrichterschaltung 7 mit ansteuerbaren Leistungshalbleiterschaltern S1-S6 zum elektrischen Ansteuern des Servomotors M, M1-M6; sowie eine zweite Schaltvorrichtung 22, die ausgebildet ist, in ihrem eingeschalteten Zustand den Servomotor M, M1-M6 mit elektrischer Energie aus der Wechselrichterschaltung 7 zu speisen und in ihrem ausgeschalteten Zustand den Servomotor M, M1-M6 von der Wechselrichterschaltung 7 elektrisch zu trennen, so dass keine elektrische Energie aus der Wechselrichterschaltung 7 an den Servomotor M, M1-M6 gelangt.

Der Gleichspannungszwischenkreis 4 kann einen Zwischenkreiskondensator 5 und einen über einen Brems-Chopper S7 des Gleichspannungszwischenkreises 4 zuschalt- und trennbaren Bremswiderstand 6 aufweisen.

Das erfindungsgemäße Verfahren, wie in Fig.1 dargestellt, weist die folgenden Schritte auf:
In einem ersten Schritt ST1 erfolgt ein Überwachen eines mit der Gleichrichterschaltung 3 verbundenen Stromkreises des Gleichspannungszwischenkreises 4 auf Fließen eines elektrischen Stroms.

Bei Auftreten eines Stopp-Signals erfolgt in einem zweiten Schritt ST2 ein Ausschalten der ersten Schaltvorrichtung, um den Gleichspannungszwischenkreis 4 von der Gleichrichterschaltung 3 elektrisch zu trennen.

Im Falle eines nach dem Ausschalten der ersten Schaltvorrichtung mittels der Überwachung festgestellten Nicht-Fließens eines elektrischen Stroms in dem mit der Gleichrichterschaltung 3 verbundenen Stromkreis des Gleichspannungszwischenkreises 4, erfolgt in einem dritten Schritt ST3 ein Bremsen des Servomotors M, M1-M6 durch Ansteuern der Leistungshalbleiterschalter S1-S6 der Wechselrichterschaltung 7 in einem generatorischen Bremsbetrieb oder durch eine Kurzschlussbremsung, um die Drehzahl des Servomotors M, M1-M6 zu reduzieren.

Im Falle eines nach dem Ausschalten der ersten Schaltvorrichtung mittels der Überwachung festgestellten Fließens eines elektrischen Stroms in dem mit der Gleichrichterschaltung 3 verbundenen Stromkreis des Gleichspannungszwischenkreises 4, erfolgt hingegen statt dem dritten Schritt ST3 in einem vierten Schritt ST4 ein Ausschalten der zweiten Schaltvorrichtung, um die Wechselrichterschaltung 7 von dem Servomotor M, M1-M6 elektrisch zu trennen.

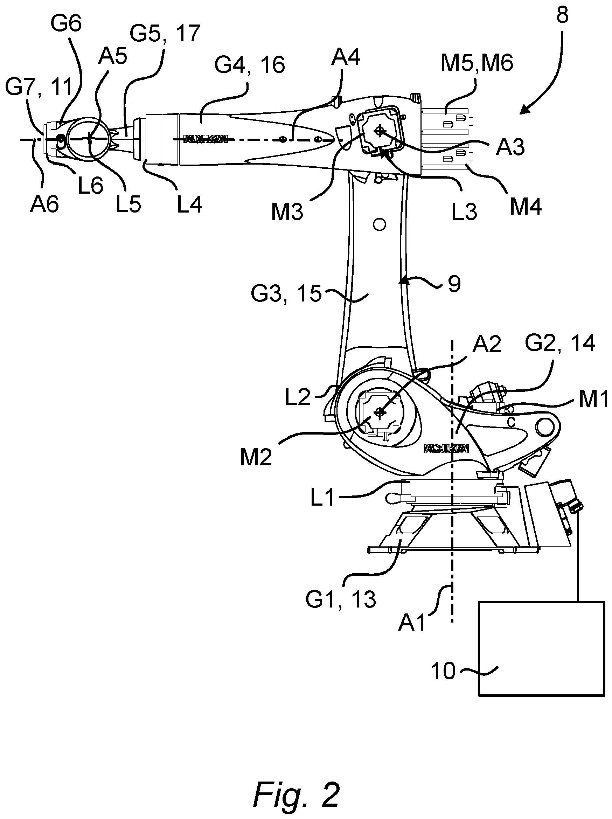

Die Fig. 2 zeigt einen Industrieroboter 8, der einen Roboterarm 9 und eine Robotersteuerung 10 aufweist. Der Roboterarm 9 umfasst im Falle des vorliegenden Ausführungsbeispiels mehrere, nacheinander angeordnete, und mittels Gelenke L1 bis L6 drehbar miteinander verbundene Glieder G1 bis G7.

Der Industrieroboter 8 weist die Robotersteuerung 10 auf, die ausgebildet ist, ein Roboterprogramm auszuführen und die Glieder G1-G7 und Gelenke L1-L6 des Roboterarms 9 automatisch zu bewegen. Eines der mehreren Glieder G1-G7 bildet ein Endglied (G7) des Roboterarms 9, das einen Werkzeugflansch 11 aufweist.

Die Robotersteuerung 10 des Industrieroboters 8 ist ausgebildet bzw. eingerichtet, ein Roboterprogramm auszuführen, durch welches die Gelenke L1 bis L6 des Roboterarms 9 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Antrieben, den Servomotoren M1 bis M6 verbunden, die ausgebildet sind, die jeweiligen Gelenke L1 bis L6 des Roboterarms 9 zu verstellen.

Bei den Gliedern G1 bis G7 handelt es sich im Falle des vorliegenden Ausführungsbeispiels um ein Robotergrundgestell 13 und ein relativ zum Robotergrundgestell 13 um eine vertikal verlaufende Achse A1 drehbar gelagertes Karussell 14. Weitere Glieder des Roboterarms 9 sind eine Schwinge 15, ein Armausleger 16 und eine vorzugsweise mehrachsige Roboterhand 17 mit einer als Werkzeugflansch 11 ausgeführten Befestigungsvorrichtung zum Befestigen eines Werkzeugs. Die Schwinge 15 ist am unteren Ende, d.h. an dem Gelenk L2 der Schwinge 15, das auch als Schwingenlagerkopf bezeichnet werden kann, auf dem Karussell 14 um eine vorzugsweise horizontale Drehachse A2 schwenkbar gelagert.

Am oberen Ende der Schwinge 15 ist an dem ersten Gelenk L3 der Schwinge 15 wiederum um eine ebenfalls vorzugsweise horizontale Achse A3 der Armausleger 16 schwenkbar gelagert. Dieser trägt endseitig die Roboterhand 17 mit ihren vorzugsweise drei Drehachsen A4, A5, A6. Die Gelenke L1 bis L6 sind durch jeweils einen der elektrischen Servomotoren M1 bis M6 über die Robotersteuerung 10 programmgesteuert antreibbar. Den Servomotoren M1 bis M6 ist dazu ein erfindungsgemäßer Frequenzumrichter 1, wie in Fig. 3 und Fig. 4 aufgezeigt ist, zugeordnet. Die Robotersteuerung 10 und/oder eine zugeordnete separate Steuervorrichtung können ausgebildet sein, eines oder mehrerer der erfindungsgemäßen Verfahren durchzuführen.

Der Umrichter 1, d.h. der Frequenzumrichter 1a, wie in Fig. 3, Fig. 4 und Fig. 5 aufgezeigt ist, kann an ein elektrisches Wechselspannungsnetz 2a anschließbar sein. Das elektrische Wechselspannungsnetz 2a kann ein Dreiphasenwechselspannungsnetz, beispielsweise von 50 Hertz, sein. Es kann insbesondere als ein TN-System konfiguriert sei.

Ist der Frequenzumrichter 1a an das Netz 2, d.h. an das Wechselspannungsnetz 2a angeschlossen, so kann dessen Eingangsschaltung 3, d.h. die Gleichrichterschaltung 3a die aus dem elektrischen Wechselspannungsnetz 2 gespeiste Wechselspannung in eine entsprechende Gleichspannung umwandeln. Die Gleichspannung wird dann einem Gleichspannungszwischenkreis 4 zugeführt. Der Gleichspannungszwischenkreis 4 ist im Falle der dargestellten Ausführungsbeispiele außerdem mit einem Zwischenkreiskondensator 5 und mit einem über einen Brems-Chopper S7 des Gleichspannungszwischenkreises 4 zuschalt- und trennbaren Bremswiderstand 6 versehen.

An den Gleichspannungszwischenkreis 4 schließt sich wenigstens eine aus dem Gleichspannungszwischenkreis 4 gespeiste Wechselrichterschaltung 7 mit ansteuerbaren Leistungshalbleiterschaltern S1 bis S6 an.

Im Falle des Ausführungsbeispiels der Fig. 3 und Fig. 4 ist lediglich eine einzige Wechselrichterschaltung 7 an den Gleichspannungszwischenkreis 4 angeschlossen. Diese einzige Wechselrichterschaltung 7 versorgt den einzigen Servomotor M.

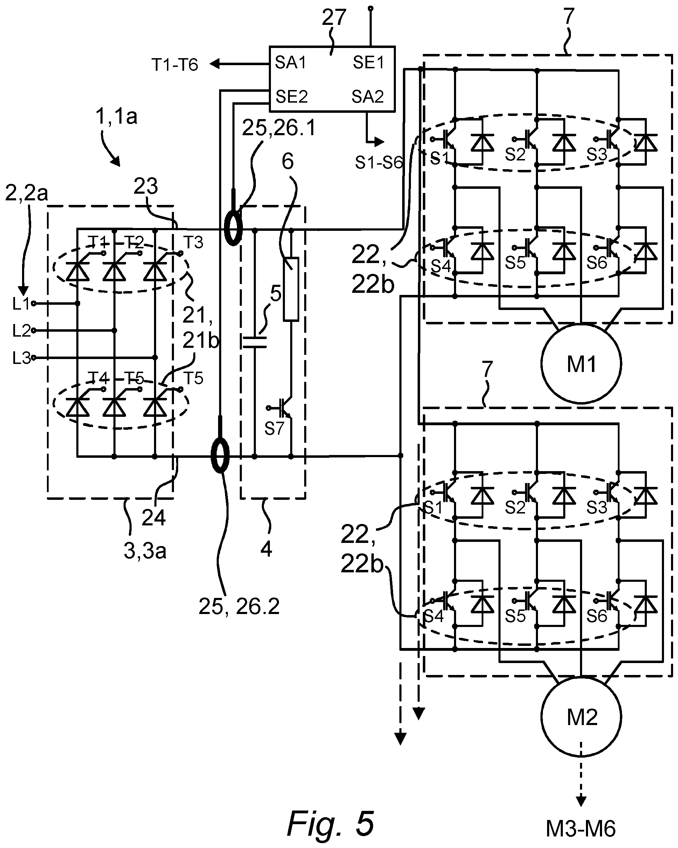

Im Falle des Ausführungsbeispiels der Fig. 5 sind mehrere Wechselrichterschaltungen 7 an den Gleichspannungszwischenkreis 4 angeschlossen. Diese mehreren Wechselrichterschaltungen 7 versorgen jeweils einen von mehreren Servomotoren M1 bis M6 gemäß Fig. 4. In Fig. 5 sind zur Veranschaulichung lediglich zwei Wechselrichterschaltungen 7 und zwei Servomotoren M1 und M2 vollständig dargestellt. Die gestrichelten Pfeile und die Bezeichnungen M3-M6 deuten eine Anzahl von weiteren Servomotoren M3, M4, M5 und M6, und weiteren Wechselrichterschaltungen 7 an, die alle an den gemeinsamen Gleichspannungszwischenkreis 4 angeschlossen sind.

Im Falle des in Fig. 2 gezeigten beispielhaften Industrieroboters 8 können beispielsweise insgesamt sechs Wechselrichterschaltungen 7 für die sechs Servomotoren M1 bis M6 der sechs Gelenke L1 bis L6 des Roboterarms 9 vorgesehen sein.

Das Überwachen des an die Gleichrichterschaltung 3a angeschlossenen Stromkreises des Gleichspannungszwischenkreises 4 auf Fließen eines elektrischen Stroms wird im Falle des dargestellten Ausführungsbeispiels entweder durch eine einfache Strommessung in einer ersten Leitung 23 des Stromkreises, der die Gleichrichterschaltung 3a mit dem Gleichspannungszwischenkreis 4 verbindet, durchgeführt, oder das Überwachen des an die Gleichrichterschaltung 3a angeschlossenen Stromkreises des Gleichspannungszwischenkreises 4 auf Fließen eines elektrischen Stroms wird durch eine zweifache Strommessung und zwar sowohl in der die Gleichrichterschaltung 3a mit dem Gleichspannungszwischenkreis 4 verbindenden ersten Leitung 23 des Stromkreises, als auch in der die Gleichrichterschaltung 3 mit dem Gleichspannungszwischenkreis 4 verbindenden zweiten Leitung 24 des Stromkreises redundant durchgeführt.

Die Erfassungseinrichtung 25 umfasst einen Stromsensor 26.1, wobei die Erfassungseinrichtung 25 ausgebildet ist, eine einfache Strommessung in einer der beiden die Gleichrichterschaltung 3a mit dem Gleichspannungszwischenkreis 4 verbindenden Leitungen 23, 24 des Stromkreises durchzuführen.

Die Erfassungseinrichtung 25 kann aber auch zwei Stromsensoren 26.1, 26.2 aufweisen, wobei die Erfassungseinrichtung 25 ausgebildet ist, eine zweifache Strommessung sowohl in der die Gleichrichterschaltung 3a mit dem Gleichspannungszwischenkreis 4 verbindenden ersten Leitung 23 des Stromkreises, als auch in der die Gleichrichterschaltung 3a mit dem Gleichspannungszwischenkreis 4 verbindenden zweiten Leitung 24 des Stromkreises redundant und/oder diversitär durchzuführen.

Gemäß den Ausführungen der Fig. 3 und Fig. 5 ist der Umrichter 1 als ein Frequenzumrichter 1a ausgebildet, das elektrische Netz 2 ist ein Wechselspannungsnetz 2a und die Eingangsschaltung 3 ist als eine Gleichrichterschaltung 3a ausgebildet.

Im ersten Verfahrensschritt erfolgt ein Überwachen eines mit der Gleichrichterschaltung 3a verbundenen Stromkreises des Gleichspannungszwischenkreises 4 auf Fließen eines elektrischen Stroms, bei Auftreten eines Stopp-Signals, erfolgt ein Ausschalten der ersten Schaltvorrichtung 21, 21b, um die Versorgung des Gleichspannungszwischenkreises 4 aus dem elektrischen Wechselspannungsnetz 2a zu beenden. Im Falle eines nach dem Ausschalten der ersten Schaltvorrichtung 21, 21b mittels der Überwachung festgestellten Nicht-Fließens eines elektrischen Stroms in dem mit der Gleichrichterschaltung 3a verbundenen Stromkreis des Gleichspannungszwischenkreises 4 erfolgt ein Bremsen des Servomotors M, M1-M6 durch Ansteuern der Leistungshalbleiterschalter S1-S6 der Wechselrichterschaltung 7 in einem generatorischen Bremsbetrieb oder durch eine Kurzschlussbremsung, um die Drehzahl des Servomotors M, M1-M6 zu reduzieren. Im Falle eines nach dem Ausschalten der ersten Schaltvorrichtung 21, 21b mittels der Überwachung festgestellten Fließens eines elektrischen Stroms in dem mit der Gleichrichterschaltung 3a verbundenen Stromkreis des Gleichspannungszwischenkreises 4 erfolgt hingegen ein Ausschalten der zweiten Schaltvorrichtung 22, 22b, um ein Einspeisen von elektrischer Energie aus dem Gleichspannungszwischenkreises 4 in den Servomotors M, M1-M6 zu unterbinden. Die erste Schaltvorrichtung 21 wird dabei von den Thyristoren 21b der Gleichrichterschaltung 3a gebildet und die zweite Schaltvorrichtung 22b wird von den Leistungshalbleiterschaltern S1-S6 der Wechselrichterschaltung 7 gebildet. Die Thyristoren 21b der Gleichrichterschaltung 3a werden beispielsweise über einen ersten Signalausgang SA1 der Steuervorrichtung 27 angesteuert. Leistungshalbleiterschaltern S1-S6 der Wechselrichterschaltung 7 werden beispielsweise über einen zweiten Signalausgang SA2 der Steuervorrichtung 27 angesteuert.

In dem Ausführungsbeispiel gemäß Fig. 4 wird die erste Schaltvorrichtung 21 von separaten Schaltern 21a gebildet und die zweite Schaltvorrichtung 22 wird von den separaten Schaltern 22a gebildet. Die erste Schaltvorrichtung 21 bzw. die ersten Schaltvorrichtungen 21 und 21a, sowie die zweite Schaltvorrichtung 22 bzw. die zweiten Schaltvorrichtungen 22 und 22a, und die Erfassungseinrichtung 25 bzw. die Stromsensoren 26.1 und/oder 26.2 sind an eine Steuervorrichtung 27 angeschlossen, welche die Überwachung durchführt.

Die Steuervorrichtung 27 und/oder die Robotersteuerung 10 sind demgemäß zum erfindungsgemäßen Steuern wenigstens eines Servomotors M, M1-M6 mittels des Frequenzumrichters 1 vorgesehen, aufweisend die Erfassungseinrichtung 25 zum Erfassen von Strom- und/oder Spannungsverläufen in dem mit der Gleichrichterschaltung 3a des Frequenzumrichters 1 verbundenen Stromkreis des Gleichspannungszwischenkreises 4 des Frequenzumrichters 1a, insbesondere über einen zweiten Signaleingang SE2 von dem Stromsensor 26.1 und/oder Stromsensor 26.2, mit einem ersten Signaleingang SE1 zum Aufnehmen eines Stopp-Signals einer den Servomotor M, M1-M6 steuernden Maschinensteuerung (bspw. die Robotersteuerung 10), einen ersten Signalausgang SA1 zum Ansteuern der ersten Schaltvorrichtung 21a des Frequenzumrichters 1a, die ausgebildet ist, in ihrem eingeschalteten Zustand den Gleichspannungszwischenkreis 4 mit elektrischer Energie aus der Gleichrichterschaltung 3a zu speisen und in ihrem ausgeschalteten Zustand den Gleichspannungszwischenkreis 4 von der Gleichrichterschaltung 3a elektrisch zu trennen, so dass keine elektrische Energie aus der Gleichrichterschaltung 3a in den Gleichspannungszwischenkreis 4 gelangt, und einen zweiten Signalausgang SA2 zum Ansteuern der zweiten Schaltvorrichtung 22a des Frequenzumrichters 1a, die ausgebildet ist, in ihrem eingeschalteten Zustand den Servomotor M, M1-M6 mit elektrischer Energie aus einer Wechselrichterschaltung 7 des Frequenzumrichters 1a zu speisen und in ihrem ausgeschalteten Zustand den Servomotor M, M1-M6 von der Wechselrichterschaltung 7 elektrisch zu trennen, so dass keine elektrische Energie aus der Wechselrichterschaltung 7 an den Servomotor M, M1-M6 gelangt, wobei die Steuervorrichtung 27 ausgebildet ist, das Verfahren durchzuführen.

## Patentansprüche

1. Verfahren zum Steuern wenigstens eines Servomotors (M, M1-M6) mittels eines Umrichters (1), der umfasst:
- eine an ein elektrisches Netz (2) angeschlossene Eingangsschaltung (3),
- einen aus der Eingangsschaltung (3) speisbaren Gleichspannungszwischenkreis (4),
- eine erste Schaltvorrichtung (21, 21a), die ausgebildet ist, in ihrem eingeschalteten Zustand den Gleichspannungszwischenkreis (4) mit elektrischer Energie aus der Eingangsschaltung (3) zu speisen und in ihrem ausgeschalteten Zustand eine Versorgung des Gleichspannungszwischenkreises (4) aus dem elektrischen Netz (2) zu unterbinden, so dass keine elektrische Energie aus dem elektrischen Netz (2) in den Gleichspannungszwischenkreis (4) gelangt,
- wenigstens eine aus dem Gleichspannungszwischenkreis (4) speisbare Wechselrichterschaltung (7) mit ansteuerbaren Leistungshalbleiterschaltern (S1-S6) zum elektrischen Ansteuern des Servomotors (M, M1-M6), **gekennzeichnet durch**
- eine zweite Schaltvorrichtung (22, 22a), die ausgebildet ist, in ihrem eingeschalteten Zustand den Servomotor (M, M1-M6) mit elektrischer Energie aus der Wechselrichterschaltung (7) zu speisen, um den Servomotor anzutreiben (M, M1-M6) und in ihrem ausgeschalteten Zustand ein Antreiben des Servomotors (M, M1-M6) zu unterbinden, so dass keine den Servomotor (M, M1-M6) antreibende elektrische Energie aus der Wechselrichterschaltung (7) an den Servomotor (M, M1-M6) gelangt, aufweisend die Schritte:
- Überwachen eines mit der Eingangsschaltung (3) verbundenen Stromkreises des Gleichspannungszwischenkreises (4) auf Fließen eines elektrischen Stroms,
- bei Auftreten eines Stopp-Signals, Ausschalten der ersten Schaltvorrichtung (21, 21a), um die Versorgung des Gleichspannungszwischenkreises (4) aus dem elektrischen Netz (2) zu beenden,
- im Falle eines nach dem Ausschalten der ersten Schaltvorrichtung (21, 21a) mittels der Überwachung festgestellten Nicht-Fließens eines elektrischen Stroms in dem mit der Eingangsschaltung (3) verbundenen Stromkreis des Gleichspannungszwischenkreises (4), Bremsen des Servomotors (M, M1-M6) durch Ansteuern der Leistungshalbleiterschalter (S1-S6) der Wechselrichterschaltung (7) in einem generatorischen Bremsbetrieb oder durch eine Kurzschlussbremsung, um die Drehzahl des Servomotors (M, M1-M6) zu reduzieren,
- im Falle eines nach dem Ausschalten der ersten Schaltvorrichtung (21, 21a) mittels der Überwachung festgestellten Fließens eines elektrischen Stroms in dem mit der Eingangsschaltung (3) verbundenen Stromkreis des Gleichspannungszwischenkreises (4), Ausschalten der zweiten Schaltvorrichtung (22, 22a), um ein Einspeisen von elektrischer Energie aus dem Gleichspannungszwischenkreises (4) in den Servomotors (M, M1-M6) zu unterbinden.

2. Verfahren nach Anspruch 1, wobei der Umrichter (1) als ein Frequenzumrichter (1a) ausgebildet ist, das elektrische Netz (2) ein Wechselspannungsnetz (2a) ist und die Eingangsschaltung (3) als eine Gleichrichterschaltung (3a) ausgebildet ist, aufweisend die Schritte:
- Überwachen eines mit der Gleichrichterschaltung (3a) verbundenen Stromkreises des Gleichspannungszwischenkreises (4) auf Fließen eines elektrischen Stroms,
- bei Auftreten eines Stopp-Signals, Ausschalten der ersten Schaltvorrichtung (21, 21a), um die Versorgung des Gleichspannungszwischenkreises (4) aus dem elektrischen Wechselspannungsnetz (2a) zu beenden,
- im Falle eines nach dem Ausschalten der ersten Schaltvorrichtung (21, 21a) mittels der Überwachung festgestellten Nicht-Fließens eines elektrischen Stroms in dem mit der Gleichrichterschaltung (3a) verbundenen Stromkreis des Gleichspannungszwischenkreises (4), Bremsen des Servomotors (M, M1-M6) durch Ansteuern der Leistungshalbleiterschalter (S1-S6) der Wechselrichterschaltung (7) in einem generatorischen Bremsbetrieb oder durch eine Kurzschlussbremsung, um die Drehzahl des Servomotors (M, M1-M6) zu reduzieren,
- im Falle eines nach dem Ausschalten der ersten Schaltvorrichtung (21, 21a) mittels der Überwachung festgestellten Fließens eines elektrischen Stroms in dem mit der Gleichrichterschaltung (3a) verbundenen Stromkreis des Gleichspannungszwischenkreises (4), Ausschalten der zweiten Schaltvorrichtung (22, 22a), um ein Einspeisen von elektrischer Energie aus dem Gleichspannungszwischenkreises (4) in den Servomotors (M, M1-M6) zu unterbinden.

3. Verfahren nach Anspruch 1 oder 2, **dadurch gekennzeichnet, dass** das Überwachen des an die Gleichrichterschaltung (3) angeschlossenen Stromkreises des Gleichspannungszwischenkreises (4) auf Fließen eines elektrischen Stroms durch eine einfache Strommessung in einer der beiden die Gleichrichterschaltung (3) mit dem Gleichspannungszwischenkreis (4) verbindenden Leitungen (23, 24) des Stromkreises durchgeführt wird.

4. Verfahren nach Anspruch 1 oder 2, **dadurch gekennzeichnet, dass** das Überwachen des an die Gleichrichterschaltung (3) angeschlossenen Stromkreises des Gleichspannungszwischenkreises (4) auf Fließen eines elektrischen Stroms durch eine zweifache Strommessung und zwar sowohl in der die Gleichrichterschaltung (3) mit dem Gleichspannungszwischenkreis (4) verbindenden einen Leitung (23) des Stromkreises, als auch in der die Gleichrichterschaltung (3) mit dem Gleichspannungszwischenkreis (4) verbindenden anderen Leitung (24) des Stromkreises redundant durchgeführt wird.

5. Verfahren nach einem der Ansprüche 1 bis 4, **dadurch gekennzeichnet, dass** das Überwachen des mit der Gleichrichterschaltung (3) verbundenen Stromkreises des Gleichspannungszwischenkreises (4) auf Fließen eines elektrischen Stroms im laufenden Betrieb des Frequenzumrichters (1) während des betriebsgemäßen Ansteuerns des Servomotors (M, M1-M6) auch unabhängig von dem Vorliegen eines Stopp-Signals durchgeführt wird.

6. Verfahren nach Anspruch 5, **dadurch gekennzeichnet, dass** der Betrag der Stromstärke in einer Hinleitung im Gleichspannungszwischenkreis (4) mit dem Betrag der Stromstärke in einer Rückleitung im Gleichspannungszwischenkreis (4) direkt auf Gleichheit verglichen werden, oder die durch das Überwachen des mit der Gleichrichterschaltung (3) verbundenen Stromkreises des Gleichspannungszwischenkreises (4) auf Fließen eines elektrischen Stroms erfassten Stromverläufe mit Ansteuersignalen für den Frequenzumrichter (1) und/oder mit Strom- und/oder Spannungsverläufen zwischen der Wechselrichterschaltung (7) und dem Servomotor (M, M1-M6) verglichen werden, und aus dem jeweiligen Vergleich eine Information über die Funktionsfähigkeit einer die Überwachung durchführenden elektrischen Komponente abgeleitet wird.

7. Steuervorrichtung zum Steuern wenigstens eines Servomotors (M, M1-M6) mittels eines Frequenzumrichters (1), aufweisend eine Erfassungseinrichtung (25) zum Erfassen von Strom- und/oder Spannungsverläufen in einem mit einer Gleichrichterschaltung (3) des Frequenzumrichters (1) verbundenen Stromkreis eines Gleichspannungszwischenkreises (4) des Frequenzumrichters (1), einen ersten Signaleingang (SE1) zum Aufnehmen eines Stopp-Signals einer den Servomotor (M, M1-M6) steuernden Maschinensteuerung, einen ersten Signalausgang (SA1) zum Ansteuern einer ersten Schaltvorrichtung (21, 21a) des Frequenzumrichters (1), die ausgebildet ist, in ihrem eingeschalteten Zustand den Gleichspannungszwischenkreis (4) mit elektrischer Energie aus der Gleichrichterschaltung (3) zu speisen und in ihrem ausgeschalteten Zustand den Gleichspannungszwischenkreis (4) von der Gleichrichterschaltung (3) elektrisch zu trennen, so dass keine elektrische Energie aus der Gleichrichterschaltung (3) in den Gleichspannungszwischenkreis (4) gelangt, **gekennzeichnet durch** einen zweiten Signalausgang (SA2) zum Ansteuern einer zweiten Schaltvorrichtung (22, 22a) des Frequenzumrichters (1), die ausgebildet ist, in ihrem eingeschalteten Zustand den Servomotor (M, M1-M6) mit elektrischer Energie aus einer Wechselrichterschaltung (7) des Frequenzumrichters (1) zu speisen und in ihrem ausgeschalteten Zustand den Servomotor (M, M1-M6) von der Wechselrichterschaltung (7) elektrisch zu trennen, so dass keine elektrische Energie aus der Wechselrichterschaltung (7) an den Servomotor (M, M1-M6) gelangt, wobei die Steuervorrichtung (27) ausgebildet ist, ein Verfahren nach einem der Ansprüche 1 bis 6 durchzuführen.

8. Steuervorrichtung nach Anspruch 7, **dadurch gekennzeichnet, dass** die Erfassungseinrichtung (25) wenigstens einen Stromsensor (26.1, 26.2) aufweist, und die Erfassungseinrichtung (25) ausgebildet ist, eine einfache Strommessung in einer der beiden die Gleichrichterschaltung (3) mit dem Gleichspannungszwischenkreis (4) verbindenden Leitungen (23, 24) des Stromkreises durchzuführen, insbesondere die Erfassungseinrichtung (25) zwei Stromsensoren (26.1, 26.2) aufweist, und die Erfassungseinrichtung (25) ausgebildet ist, eine zweifache Strommessung sowohl in der die Gleichrichterschaltung (3) mit dem Gleichspannungszwischenkreis (4) verbindenden einen Leitung (23) des Stromkreises, als auch in der die Gleichrichterschaltung (3) mit dem Gleichspannungszwischenkreis (4) verbindenden anderen Leitung (24) des Stromkreises redundant und/oder diversitär durchzuführen.

9. Roboter, aufweisend einen Roboterarm (9) mit mehreren Gelenken (L1-L6) und mehreren Gliedern (G1-G7), die durch die Bewegungen der Gelenke (L1-L6) des Roboterarms (9) gegeneinander verstellbar sind, wobei wenigstens einem der Gelenke (L1-L6) ein Servomotor (M, M1-M6) zugeordnet ist, welcher ausgebildet ist, das wenigstens eine Gelenk (L1-L6) zu verstellen und zwar durch automatisches Ansteuern des Servomotors (M, M1-M6), und aufweisend eine Robotersteuerung (10), die ausgebildet ist zum automatischen Ansteuern wenigstens eines Servomotors (M, M1-M6) des Roboterarms (9), um die Glieder (G1-G7) des Roboterarms (9) durch angetriebenes Bewegen der Gelenke (L1-L6) automatisch gegeneinander zu verstellen, wobei die Robotersteuerung (10) eine Steuervorrichtung (27) nach Anspruch 7 oder 8 umfasst.

10. Computerprogrammprodukt aufweisend einen maschinenlesbaren Träger, auf dem Programmcode gespeichert ist, der von einer Steuervorrichtung (27) nach Anspruch 7 oder 8 auslesbar ist und der die Steuervorrichtung (27) ausbildet und/oder einrichtet, ein Verfahren nach einem der Ansprüche 1 bis 6 durchzuführen, wenn der Programmcode von der Steuervorrichtung (27) ausgeführt wird.

## Claims

1. Method for controlling at least one servomotor (M, M1-M6) by means of a converter (1) which comprises:
- an input circuit (3) connected to an electrical network (2),
- a DC link (4) which is able to be supplied with power from the input circuit (3),
- a first switching apparatus (21, 21a) which is designed, in its switched-on state, to supply the DC link (4) with electrical energy from the input circuit (3) and, in its switched-off state, to prevent the DC link (4) from being supplied with power from the electrical network (2) such that no electrical energy from the electrical network (2) reaches the DC link (4),
- at least one inverter circuit (7) which is able to be supplied with power from the DC link (4) and which has actuatable power semiconductor switches (S1-S6) for electrically actuating the servomotor (M, M1-M6), **characterized by**
- a second switching apparatus (22, 22a) which is designed, in its switched-on state, to supply the servomotor (M, M1-M6) with electrical energy from the inverter circuit (7) in order to drive the servomotor (M, M1-M6) and, in its switched-off state, to prevent the servomotor (M, M1-M6) from being driven such that no electrical energy driving the servomotor (M, M1-M6) reaches the servomotor (M, M1-M6) from the inverter circuit (7), said method having the steps of:
- monitoring whether an electrical current is flowing through a circuit of the DC link (4) connected to the input circuit (3),
- when a stop signal occurs, switching off the first switching apparatus (21, 21a) in order to terminate the supply of power from the electrical network (2) to the DC link (4),
- if, after the first switching apparatus (21, 21a) has been switched off, the monitoring determines that there is no electrical current flowing through the circuit of the DC link (4) connected to the input circuit (3), braking the servomotor (M, M1-M6) by actuating the power semiconductor switches (S1-S6) of the inverter circuit (7) in a regenerative braking mode or by short-circuit braking in order to reduce the speed of the servomotor (M, M1-M6),
- if, after the first switching apparatus (21, 21a) has been switched off, the monitoring determines that there is an electrical current flowing through the circuit of the DC link (4) connected to the input circuit (3), switching off the second switching apparatus (22, 22a) in order to prevent electrical energy from being supplied from the DC link (4) to the servomotor (M, M1-M6).

2. Method according to Claim 1, wherein the converter (1) is in the form of a frequency converter (1a), the electrical network (2) is an AC voltage network (2a) and the input circuit (3) is in the form of a rectifier circuit (3a), said method having the steps of:
- monitoring whether an electrical current is flowing through a circuit of the DC link (4) connected to the rectifier circuit (3a),
- when a stop signal occurs, switching off the first switching apparatus (21, 21a) in order to terminate the supply of power from the electrical AC voltage network (2a) to the DC link (4),
- if, after the first switching apparatus (21, 21a) has been switched off, the monitoring determines that there is no electrical current flowing through the circuit of the DC link (4) connected to the rectifier circuit (3a), braking the servomotor (M, M1-M6) by actuating the power semiconductor switches (S1-S6) of the inverter circuit (7) in a regenerative braking mode or by short-circuit braking in order to reduce the speed of the servomotor (M, M1-M6),
- if, after the first switching apparatus (21, 21a) has been switched off, the monitoring determines that there is an electrical current flowing through the circuit of the DC link (4) connected to the rectifier circuit (3a), switching off the second switching apparatus (22, 22a) in order to prevent electrical energy from being supplied from the DC link (4) to the servomotor (M, M1-M6).

3. Method according to Claim 1 or 2, **characterized in that** the monitoring of whether an electrical current is flowing through the circuit of the DC link (4) connected to the rectifier circuit (3) is carried out by way of a single current measurement in one of the two lines (23, 24) of the circuit that connect the rectifier circuit (3) to the DC link (4).

4. Method according to Claim 1 or 2, **characterized in that** the monitoring of whether an electrical current is flowing through the circuit of the DC link (4) connected to the rectifier circuit (3) is carried out with redundancy by way of a two-fold current measurement, namely both in the one line (23) of the circuit that connects the rectifier circuit (3) to the DC link (4) and in the other line (24) of the circuit that connects the rectifier circuit (3) to the DC link (4).

5. Method according to one of Claims 1 to 4, **characterized in that** the monitoring of whether an electrical current is flowing through the circuit of the DC link (4) connected to the rectifier circuit (3) is carried out during operation of the frequency converter (1) during the operational actuation of the servomotor (M, M1-M6) even independently of the presence of a stop signal.

6. Method according to Claim 5, **characterized in that** the magnitude of the current intensity in a forward line in the DC link (4) is compared directly with the magnitude of the current intensity in a return line in the DC link (4) for equivalence, or the current responses measured by the monitoring of whether an electrical current is flowing through the circuit of the DC link (4) connected to the rectifier circuit (3) are compared with actuation signals for the frequency converter (1) and/or with current and/or voltage responses between the inverter circuit (7) and the servomotor (M, M1-M6), and information about the functionality of an electrical component carrying out the monitoring is derived from the respective comparison.

7. Control apparatus for controlling at least one servomotor (M, M1-M6) by means of a frequency converter (1), having a measuring device (25) for measuring current and/or voltage responses in a circuit of a DC link (4) of the frequency converter (1) connected to a rectifier circuit (3) of the frequency converter (1), a first signal input (SE1) for receiving a stop signal from a machine controller controlling the servomotor (M, M1-M6), a first signal output (SA1) for actuating a first switching apparatus (21, 21a) of the frequency converter (1), which first switching apparatus is designed, in its switched-on state, to supply the DC link (4) with electrical energy from the rectifier circuit (3) and, in its switched-off state, to electrically disconnect the DC link (4) from the rectifier circuit (3) such that no electrical energy from the rectifier circuit (3) reaches the DC link (4), **characterized by** a second signal output (SA2) for actuating a second switching apparatus (22, 22a) of the frequency converter (1), which second switching apparatus is designed, in its switched-on state, to supply the servomotor (M, M1-M6) with electrical energy from an inverter circuit (7) of the frequency converter (1) and, in its switched-off state, to electrically disconnect the servomotor (M, M1-M6) from the inverter circuit (7) such that no electrical energy from the inverter circuit (7) reaches the servomotor (M, M1-M6), wherein the control apparatus (27) is designed to carry out a method according to one of Claims 1 to 6.

8. Control apparatus according to Claim 7, **characterized in that** the measuring device (25) has at least one current sensor (26.1, 26.2), and the measuring device (25) is designed to carry out a single current measurement in one of the two lines (23, 24) of the circuit that connect the rectifier circuit (3) to the DC link (4), in particular the measuring device (25) has two current sensors (26.1, 26.2), and the measuring device (25) is designed to carry out a two-fold current measurement with redundancy and/or diversity both in the one line (23) of the circuit that connects the rectifier circuit (3) to the DC link (4) and in the other line (24) of the circuit that connects the rectifier circuit (3) to the DC link (4).

9. Robot having a robotic arm (9) with a plurality of joints (L1-L6) and a plurality of parts (G1-G7), which parts are movable with respect to one another by moving the joints (L1-L6) of the robotic arm (9), wherein at least one of the joints (L1-L6) is assigned a servomotor (M, M1-M6) which is designed to move the at least one joint (L1-L6), namely by way of the automatic actuation of the servomotor (M, M1-M6), and having a robot controller (10) which is designed to automatically actuate at least one servomotor (M, M1-M6) of the robotic arm (9) in order to automatically move the parts (G1-G7) of the robotic arm (9) with respect to one another by way of driven movement of the joints (L1-L6), wherein the robot controller (10) comprises a control apparatus (27) according to Claim 7 or 8.

10. Computer program product having a machine-readable carrier on which program code is stored, which program code is able to be read by a control apparatus (27) according to Claim 7 or 8 and instructs and/or configures the control apparatus (27) to carry out a method according to one of Claims 1 to 6 when the program code is executed by the control apparatus (27).

## Revendications

1. Procédé de commande d'au moins un servomoteur (M, M1-M6) au moyen d'un convertisseur (1) qui comprend :
- un circuit d'entrée (3) raccordé à un réseau électrique (2),
- un circuit intermédiaire à courant continu {4) pouvant être alimenté à partir du circuit d'entrée (3),
- un premier dispositif de commutation (21, 21a) qui est conçu pour alimenter, dans son état activé, le circuit intermédiaire à courant continu (4) en énergie électrique à partir du circuit d'entrée (3) et pour cesser, dans son état désactivé (2), l'alimentation du le circuit intermédiaire à courant continu (4) à partir du réseau électrique pour qu'aucune énergie électrique du réseau électrique (2) ne parvienne au circuit intermédiaire à courant continu (4),
- au moins un circuit onduleur (7) qui peut être alimenté à partir du circuit intermédiaire à courant continu (4) et qui comporte des commutateurs à semi-conducteurs de puissance commandables (S1-S6) destinés à commander électriquement le servomoteur (M, M1-M6), **caractérisé par**
- un deuxième dispositif de commutation (22, 22a) qui est conçu pour alimenter, dans son état activé, le servomoteur (M, M1-M6) en énergie électrique provenant du circuit onduleur (7) afin d'entraîner le servomoteur (M, M1-M6) et pour empêcher, dans son état désactivé, l'entraînement du servomoteur (M, M1-M6) pour qu'aucune énergie électrique entraînant le servomoteur {M, M1-M6) ne parvienne du circuit onduleur (7) au servomoteur (M, M1-M6), ledit procédé comprenant les étapes suivantes :
- surveiller un circuit de courant, raccordé au circuit d'entrée (3), du circuit intermédiaire à courant continu (4) en termes de circulation d'un courant électrique,
- lors de l'apparition d'un signal d'arrêt, désactiver le premier dispositif de commutation (21, 21a) pour mettre fin à l'alimentation du circuit intermédiaire à courant continu (4) à partir du réseau électrique (2),
- dans le cas où un courant électrique ne circule pas dans le circuit de courant, raccordé au circuit d'entrée (3), du circuit intermédiaire à courant continu (4), ce qui est détecté au moyen d'une surveillance après que le premier dispositif de commutation (21, 21a) a été désactivé, freiner le servomoteur (M, M1-M6) par commande des commutateurs à semi-conducteurs de puissance (S1-S6) du circuit onduleur (7) dans un mode de freinage générateur ou par un freinage par court-circuit afin de réduire la vitesse de rotation du servomoteur (M, Ml-M6),
- dans le cas où un courant électrique circule dans le circuit de courant, raccordé au circuit d'entrée (3), du circuit intermédiaire à courant continu (4), ce qui est détecté au moyen de la surveillance après que le premier dispositif de commutation (21, 21a) a été désactivé, désactiver le deuxième dispositif de commutation (22, 22a) afin d'empêcher l'injection d'énergie électrique du circuit intermédiaire à courant continu (4) dans le servomoteur {M, M1-M6).

2. Procédé selon la revendication 1, le convertisseur (1) étant conçu comme un convertisseur de fréquence (la), le réseau électrique (2) étant un réseau de tension alternative (2a) et le circuit d'entrée (3) étant conçu comme un circuit redresseur (3a), ledit procédé comprenant les étapes suivantes :
- surveiller un circuit de courant, relié au circuit redresseur (3a), du circuit intermédiaire à courant continu (4) en termes de circulation d'un courant électrique,
- lors de l'apparition d'un signal d'arrêt, désactiver le premier dispositif de commutation (21, 21a) pour mettre fin à l'alimentation du circuit intermédiaire à courant continu (4) à partir du réseau électrique à tension alternative (2a),
- dans le cas où un courant électrique ne circule pas dans le circuit de courant, relié au circuit redresseur (3a), du circuit intermédiaire à courant continu (4), ce qui est détecté au moyen d'une surveillance après que le premier dispositif de commutation (21, 21a) a été désactivé, freiner le servomoteur (M, M1-M6) par commande des commutateurs à semi-conducteurs de puissance (S1-S6) du circuit onduleur (7) dans un mode de freinage générateur ou par un freinage par court-circuit afin de réduire la vitesse de rotation du servomoteur (M, Ml-M6),
- dans le cas où un courant électrique circule dans le circuit de courant, relié au circuit redresseur (3a), du circuit intermédiaire à courant continu (4), ce qui est détecté au moyen de la surveillance après que le premier dispositif de commutation (21, 21a) a été désactivé, désactiver le deuxième dispositif de commutation (22, 22a) afin d'empêcher l'injection d'énergie électrique du circuit intermédiaire à courant continu (4) dans le servomoteur {M, M1-M6).

3. Procédé selon la revendication 1 ou 2, **caractérisé en ce que** la surveillance du circuit de courant, raccordé au circuit redresseur (3), du circuit intermédiaire à courant continu (4) en termes de circulation d'un courant électrique est réalisée par une simple mesure de courant dans l'une des deux lignes (23, 24) du circuit de courant qui relient le circuit redresseur (3) au circuit intermédiaire à courant continu (4).

4. Procédé selon la revendication 1 ou 2, **caractérisé en ce que** la surveillance du circuit de courant, raccordé au circuit redresseur (3), du circuit intermédiaire à courant continu (4) en termes de circulation d'un courant électrique est réalisée de manière redondante par une double mesure de courant, c'est à dire aussi bien dans l'une des lignes (23) du circuit de courant qui relient le circuit redresseur (3) au circuit intermédiaire à courant continu (4) que dans l'autre des lignes (24) du circuit de courant qui relient le circuit redresseur (3) au circuit intermédiaire à courant continu (4).

5. Procédé selon l'une des revendications 1 à 4, **caractérisé en ce que** la surveillance du circuit de courant, relié au circuit redresseur (3), du circuit intermédiaire à courant continu (4) en termes de circulation d'un courant électrique est également réalisée indépendamment de la présence d'un signal d'arrêt pendant la commande opérationnelle du servomoteur (M, M1-M6) au cours du fonctionnement du convertisseur de fréquence (1).

6. Procédé selon la revendication 5, **caractérisé en ce que** la valeur absolue de l'intensité de courant dans une ligne aller dans le circuit intermédiaire à courant continu (4) est comparée en termes d'égalité directement à la valeur absolue de l'intensité de courant dans une ligne de retour dans le circuit intermédiaire à courant continu (4), ou les courbes de courant détectées par la surveillance du circuit d'entrée, relié au circuit redresseur (3), du circuit intermédiaire à courant continu (4) en termes de circulation d'un courant électrique, sont comparées à des signaux de commande du convertisseur de fréquence (1) et/ou à des courbes de courant et/ou de tension entre le circuit onduleur (7) et le servomoteur (M, M1-M6), et une information sur la fonctionnalité d'un composant électrique effectuant la surveillance est tirée de la comparaison respective.

7. Dispositif de commande destiné à commander au moins un servomoteur (M, M1-M6) au moyen d'un convertisseur de fréquence (1), ledit dispositif de commande comportant un module de détection (25) destiné à détecter des courbes de courant et/ou de tension dans un circuit de courant, relié à un circuit redresseur (3) du convertisseur de fréquence (1), d'un circuit intermédiaire à courant continu (4) du convertisseur de fréquence (1), une première entrée de signal (SE1) destinée à recevoir un signal d'arrêt d'une commande de machine commandant le servomoteur (M, M1- M6), une première sortie de signal (SA1) destinée à commander un premier dispositif de commutation (21, 21a) du convertisseur de fréquence (1), qui est conçu pour alimenter dans son état activé le circuit intermédiaire à courant continu (4) en énergie électrique à partir du circuit redresseur (3) et pour séparer électriquement dans son état désactivé le circuit intermédiaire à courant continu (4) du circuit redresseur (3) pour qu'aucune énergie électrique ne parvienne du circuit redresseur (3) au circuit intermédiaire à courant continu (4), **caractérisé par** une deuxième sortie de signal (SA2) destinée à commander un deuxième dispositif de commutation (22, 22a) du convertisseur de fréquence (1), qui est conçu pour alimenter dans son état activé le servomoteur (M, M1-M6) en énergie électrique à partir d'un circuit onduleur (7) du convertisseur de fréquence (1) et pour séparer électriquement dans son état désactivé le servomoteur (M, M1-M6) du circuit onduleur (7) pour qu'aucune énergie électrique ne parvienne du circuit onduleur (7) au servomoteur (M, M1-M6), le dispositif de commande (27) étant conçu pour mettre en oeuvre un procédé selon l'une des revendications 1 à 6.

8. Dispositif de commande selon la revendication 7, **caractérisé en ce que** le module de détection (25) comporte au moins un capteur de courant (26.1, 26.2), et le module de détection (25) est conçu pour réaliser une simple mesure de courant dans l'une des deux lignes (23, 24) du circuit de courant qui relient le circuit redresseur (3) au circuit intermédiaire à courant continu (4), en particulier le module de détection (25) comporte deux capteurs de courant (26.1, 26.2), et le module de détection (25) est conçu pour réaliser de manière redondante et/ou diversifiée une double mesure de courant aussi bien dans une des lignes (23) du circuit de courant qui relient le circuit redresseur (3) au circuit intermédiaire à courant continu (4) que dans l'autre des lignes (24) du circuit de courant qui relient le circuit redresseur (3) au circuit intermédiaire à courant continu (4).

9. Robot, comportant un bras de robot (9) à plusieurs articulations (L1-L6) et plusieurs éléments (G1-G7) qui sont déplaçables les uns par rapport aux autres par les mouvements des articulations (L1-L6) du bras de robot (9), au moins une des articulations (L1-L6) étant associée à un servomoteur (M, M1-M6) qui est conçu pour déplacer l'au moins une articulation (L1-L6), et ce par commande automatique du servomoteur (M, M1-M6), et comportant une commande de robot (10) qui est conçue pour commander automatiquement au moins un servomoteur (M, M1-M6) du bras de robot (9) afin de déplacer les éléments (G1-G7) du bras de robot (9) par entraînement des articulations (L1-L6) automatiquement les unes par rapport aux autres, la commande de robot (10) comprenant un dispositif de commande (27) selon la revendication 7 ou 8.

10. Produit de programme informatique comportant un support lisible par machine sur lequel est mémorisé un code de programme, qui peut être lu par un dispositif de commande (27) selon la revendication 7 ou 8 et qui instruit et/ou oriente le dispositif de commande (27) pour mettre en oeuvre un procédé selon l'une des revendications 1 à 6 lorsque le code de programme est exécuté par le dispositif de commande (27).
